(19) Europäisches Patentamt
European Patent Office
Office européen des brevets

(11) **EP 4 262 121 A1**

(12) **EUROPEAN PATENT APPLICATION**
published in accordance with Art. 153(4) EPC

(43) Date of publication:
**18.10.2023 Bulletin 2023/42**

(21) Application number: **20967736.8**

(22) Date of filing: **31.12.2020**

(51) International Patent Classification (IPC):
**H04L 5/00** (2006.01)

(52) Cooperative Patent Classification (CPC):
**H04L 5/00**

(86) International application number:
**PCT/CN2020/142103**

(87) International publication number:
**WO 2022/141397 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **SUN, Yan**
  **Shenzhen, Guangdong 518129 (CN)**
• **WU, Yiqun**
  **Shenzhen, Guangdong 518129 (CN)**

(74) Representative: **Epping - Hermann - Fischer Patentanwaltsgesellschaft mbH
Schloßschmidstraße 5
80639 München (DE)**

(54) **NEURAL NETWORK TRAINING METHOD AND RELATED APPARATUS**

(57) A neural network training method and a related apparatus are provided. The method includes: A first device receives first channel sample information from a second device. The first device determines a first neural network. The first neural network is obtained through training based on the first channel sample information, and is used to perform inference based on the first channel sample information to obtain second channel sample information. According to this method, air interface signaling overheads can be effectively reduced, adaptability to a channel environment is achieved, and communication performance is improved.

FIG. 10

**Description**

**TECHNICAL FIELD**

This application relates to the field of communication technologies, and in particular, to a neural network training method and a related apparatus.

**BACKGROUND**

A wireless communication system may include three parts: a transmitter (transmitter), a channel (channel), and a receiver (receiver). The channel is used for transmission of signals exchanged between the transmitter and the receiver. For example, the transmitter may be an access network device, for example, a base station (base station, BS), and the receiver may be a terminal device. For another example, the transmitter may be a terminal device, and the receiver may be an access network device.

To optimize performance of the communication system, the transmitter and the receiver may be optimized. The transmitter and the receiver each may have an independent mathematical model. Therefore, the transmitter and the receiver are independently optimized based on respective mathematical models. For example, a mathematical channel model may be used to generate a channel sample to optimize the transmitter and the receiver.

However, because the mathematical channel model is non-ideal and non-linear, the channel sample generated by the mathematical channel model defined in a protocol can hardly reflect an actual channel environment. Transmission of a large quantity of actual channel samples between the transmitter and the receiver occupies excessive air interface resources, affecting data transmission efficiency.

**SUMMARY**

According to a first aspect, an embodiment of this application provides a neural network training method, including:

A first device receives first channel sample information from a second device. The first device determines a first neural network.

The first neural network is obtained through training based on the first channel sample information, and is used to perform inference to obtain second channel sample information.

Optionally, an example in which the first device is an access network device and the second device is a terminal device is used for description. It may be understood that the first device may be the access network device, a chip used in the access network device, a circuit used in the access network device, or the like; and the second device may be the terminal device, a chip used in the terminal device, a circuit used in the terminal device, or the like.

In a possible design, the method includes: The first device obtains the first neural network through training based on the first channel sample information. The first neural network is used to generate new channel sample information, for example, the second channel sample information.

In a possible design, the method includes: The first device receives information about the first neural network from a third device, and determines the first neural network based on the information about the first neural network. The first neural network is obtained by the third device through training based on the first channel sample information.

According to this method, the first neural network may be obtained through training based on the first channel sample information. The first neural network is used to perform inference to obtain the second channel sample information. According to this method, air interface signaling overheads during channel sample information transmission can be effectively reduced.

In a possible design, the second channel sample information is used to train a second neural network and/or a third neural network, and the second neural network and/or the third neural network are/is used for transmission of target information between the first device and the second device.

In a possible design, the method includes: The first device trains the second neural network and/or the third neural network based on the second channel sample information or based on the second channel sample information and the first channel sample information. The second neural network and/or the third neural network are/is used for transmission of target information between the first device and the second device.

In a possible design, the method includes: The first device receives information about the second neural network and/or information about the third neural network from the third device. The second neural network and/or the third neural network are/is used for transmission of target information between the first device and the second device. The second neural network and/or the third neural network are/is obtained by the third device through training based on the second channel sample information or based on the second channel sample information and the first channel sample information.

According to this method, air interface signaling overheads can be effectively reduced, and a channel environment in which a trained neural network is located can be adapted. The second neural network and the third neural network obtained through training are closer to an actual channel environment, and communication performance is improved. A speed of training the second neural network and the third neural network is also greatly improved.

In a possible design, the method further includes: The first device sends a first reference signal to the second device. Optionally, the first reference signal includes a demodulation reference signal DMRS or a channel state information reference signal CSI-RS. Optionally, a sequence type of the first reference signal includes a ZC sequence or a gold sequence.

In a possible design, the first channel sample information includes but is not limited to a second reference signal and/or channel state information (channel state information, CSI). The second reference signal is the first reference signal propagated through a channel. Alternatively, it is described as that the second reference signal is the first reference signal received by the second device from the first device.

In a possible design, the information about the first neural network includes a model variation of the first neural network relative to a reference neural network.

In a possible design, the information about the first neural network includes one or more of the following: a weight of a neural network, an activation function of a neuron, a quantity of neurons at each layer of the neural network, an inter-layer cascading relationship of the neural network, and a network type of each layer of the neural network.

In a possible design, the first neural network is a generative neural network. Optionally, the first neural network is a generative adversarial network (Generative Adversarial Network, GAN) or a variational autoencoder (Variational Autoencoder, VAE). According to this method, the second channel sample information that has a same distribution as or has a similar distribution to the first channel sample information may be obtained, so that the second channel sample information is closer to an actual channel environment.

In a possible design, the method further includes: The first device receives capability information of the second device from the second device. The capability information indicates one or more of the following information:

(1) whether the second device supports using the neural network to replace or implement a function of a communication module, where
the communication module includes but is not limited to an OFDM modulation module, an OFDM demodulation module, a constellation mapping module, a constellation demapping module, a channel encoding module, a channel decoding module, a precoding module, an equalization module, an interleaving module, and/or a de-interleaving module;
(2) whether the second device supports a network type of the third neural network;
(3) whether the second device supports receiving the information about the third neural network using signaling;
(4) the reference neural network stored by the second device;
(5) memory space that may be used by the second device to store the third neural network; and
(6) computing power information that may be used by the second device to run the neural network.

According to this method, the first device may receive the capability information sent by the second device. The capability information notifies the first device of related information about the second device. The first device may perform an operation related to the third neural network based on the capability information, to ensure that the second device can normally use the third neural network.

In a possible design, the method further includes: The first device sends the information about the third neural network to the second device.

In this embodiment, after completing the training of the third neural network, the first device sends the information about the third neural network to the second device. The information about the third neural network includes but is not limited to: a weight of a neural network, an activation function of a neuron, a quantity of neurons at each layer of the neural network, an inter-layer cascading relationship of the neural network, and/or a network type of each layer of the neural network. For example, the information about the third neural network may indicate different activation functions for different neurons.

In a possible design, when the third neural network is preconfigured (or predefined) in the second device, the information about the third neural network may alternatively be a model variation of the third neural network. The model variation includes but is not limited to: a weight of a changed neural network, a changed activation function, a quantity of neurons at one or more layers of the changed neural network, an inter-layer cascading relationship of the changed neural network, and/or a network type of one or more layers of the changed neural network. For example, the pre-configuration may be performed by the access network device using signaling, and the pre-definition may be performed in a protocol. For example, the third neural network in the terminal device is predefined as a neural network A in the protocol.

In embodiments of this application, there may be a plurality of implementation solutions for the information about the third neural network, so that implementation flexibility of the solution is improved.

According to a second aspect, an embodiment of this application provides a neural network training method, including: A second device performs channel estimation based on a first reference signal received from a first device, to determine first channel sample information. The second device sends the first channel sample information to the first device. The second device receives information about a third neural network from the first device. The third neural network is used for transmission of target information between the first device and the second device.

In a possible design, the method further includes: The second device sends capability information of the second device to the first device.

For descriptions of the first channel sample information, the information about the third neural network, the capability information of the second device, and the like, refer to the first aspect. Details are not described herein again.

According to a third aspect, an embodiment of this application provides a neural network training method, including:

A first device sends a first reference signal to a second device. The first device receives information about a first neural network from the second device. The first neural network is used to perform inference to obtain second channel sample information.

In the method, the second device (for example, a terminal device) obtains the first neural network through training based on the first channel sample information. The first neural network is used to perform inference to obtain the second channel sample information. According to this method, air interface signaling overheads during channel sample information transmission can be effectively reduced.

In a possible design, the second channel sample information is used to train a second neural network and/or a third neural network, and the second neural network and/or the third neural network are/is used for transmission of target information between the first device and the second device.

In a possible design, the method includes: The first device trains the second neural network and/or the third neural network based on the second channel sample information or based on the second channel sample information and the first channel sample information. The second neural network and/or the third neural network are/is used for transmission of target information between the first device and the second device.

In a possible design, the method includes: The first device receives information about the second neural network and/or information about the third neural network from a third device. The second neural network and/or the third neural network are/is used for transmission of target information between the first device and the second device. The second neural network and/or the third neural network are/is obtained by the third device through training based on the second channel sample information or based on the second channel sample information and the first channel sample information.

According to this method, air interface signaling overheads can be effectively reduced, and a channel environment in which a trained neural network is located can be adapted. The second neural network and the third neural network obtained through training are closer to an actual channel environment, and communication performance is improved. A speed of training the second neural network and the third neural network is also greatly improved.

Specifically, for descriptions of the first reference signal, the first neural network, the information about the first neural network, the second neural network, and/or the third neural network, refer to the first aspect. Details are not described again.

In a possible design, the method further includes: The first device sends the information about the third neural network to the second device.

Specifically, for descriptions of the information about the third neural network, refer to the first aspect. Details are not described again.

In a possible design, the method further includes:

The first device receives capability information from the second device. The capability information indicates one or more of the following information about the second device:

(1) whether to support using the neural network to replace or implement a function of a communication module;
(2) whether to support a network type of the first neural network;
(3) whether to support a network type of the third neural network;
(4) whether to support receiving information about a reference neural network using signaling, where the reference neural network is used to train the first neural network;
(5) whether to support receiving the information about the third neural network using signaling;
(6) stored reference neural network;
(7) memory space for storing the first neural network and/or the third neural network;
(8) computing power information that may be used to run the neural network; and
(9) location information of the second device.

According to a fourth aspect, an embodiment of this application provides a neural network training method, including:

A second device performs channel estimation based on a first reference signal received from a first device, to determine first channel sample information. The second device determines a first neural network. The first neural network is obtained through training based on first channel sample information. The second device sends information about the first neural network to the first device.

Specifically, for descriptions of the first reference signal, the first neural network, the first channel sample information, the information about the first neural network, and the like, refer to the third aspect. Details are not described again.

In a possible design, the method further includes:

The second device receives information about a third neural network from the first device. For the information about the third neural network, refer to the third aspect. Details are not described herein again.

In a possible design, the method further includes: The second device sends capability information to the first device. For the capability information, refer to the third aspect. Details are not described herein again.

According to a fifth aspect, an embodiment of this application provides a neural network training method, including: A third device receives first channel sample information from a first device. The third device obtains a first neural network through training based on the first channel sample information. The first neural network is used to perform inference to obtain second channel sample information.

In a possible design, the method further includes: training a second neural network and/or a third neural network based on the second channel sample information, and sending information about the second neural network and/or information about the third neural network to the first device. The second neural network and/or the third neural network are/is used for transmission of target information between the first device and a second device.

According to a sixth aspect, an apparatus is provided. The apparatus may be an access network device, an apparatus in the access network device, or an apparatus that can be used with the access network device.

In a possible design, the apparatus may include modules for performing the method/operations/steps/actions described in the first aspect. The modules may be hardware circuits, may be software, or may be implemented by using a combination of a hardware circuit and software. In a design, the apparatus may include a processing module and a transceiver module.

For example, the transceiver module is configured to receive first channel sample information from a second device.

The processing module is configured to determine a first neural network. The first neural network is obtained through training based on the first channel sample information, and is used to perform inference to obtain second channel sample information. For descriptions of the first neural network, the first channel sample information, the second channel sample information, and other operations, refer to the first aspect. Details are not described herein again.

In a possible design, the apparatus may include modules for performing the method/operations/steps/actions described in the third aspect. The modules may be hardware circuits, may be software, or may be implemented by using a combination of a hardware circuit and software. In a design, the apparatus may include a processing module and a transceiver module.

For example, the transceiver module is configured to send a first reference signal to the second device, and receive information about a first neural network from the second device. The first neural network is used to perform inference to obtain the second channel sample information.

For descriptions of the first neural network, the first channel sample information, the second channel sample information, and other operations, refer to the third aspect. Details are not described herein again.

According to a seventh aspect, an apparatus is provided. The apparatus may be a terminal device, an apparatus in the terminal device, or an apparatus that can be used with the terminal device.

In a possible design, the apparatus may include modules for performing the method/operations/steps/actions described in the second aspect. The modules may be hardware circuits, may be software, or may be implemented by using a combination of a hardware circuit and software. In a design, the apparatus may include a processing module and a transceiver module.

For example, the processing module is configured to perform channel estimation based on a first reference signal received from a first device, to determine first channel sample information.

The transceiver module is configured to send the first channel sample information to the first device.

The transceiver module is further configured to receive information about a third neural network from the first device. The third neural network is used for transmission of target information between the first device and a second device.

For descriptions of the first reference signal, the first channel sample information, the third neural network, and other operations, refer to the second aspect. Details are not described herein again.

In a possible design, the apparatus may include modules for performing the method/operations/steps/actions described in the fourth aspect. The modules may be hardware circuits, may be software, or may be implemented by using a combination of a hardware circuit and software. In a design, the apparatus may include a processing module and a transceiver module.

For example, the processing module is configured to perform channel estimation based on the first reference signal received from the first device, to determine the first channel sample information.

The processing module is further configured to determine a first neural network. The first neural network is obtained through training based on the first channel sample information.

The transceiver module is configured to send information about the first neural network to the first device.

For descriptions of the first reference signal, the first channel sample information, the first neural network, and other operations, refer to the fourth aspect. Details are not described herein again.

According to an eighth aspect, an apparatus is provided. The apparatus may be an AI node, an apparatus in the AI node, or an apparatus that can be used with the AI node.

In a possible design, the apparatus may include modules for performing the method/operations/steps/actions described in the fifth aspect. The modules may be hardware circuits, may be software, or may be implemented by using a combination of a hardware circuit and software. In a design, the apparatus may include a processing module and a transceiver module.

For example, the transceiver module is configured to receive first channel sample information from a first device.

The processing module is configured to obtain a first neural network through training based on the first channel sample information. The first neural network is used to perform inference to obtain second channel sample information.

In a possible design, the processing module is further configured to train a second neural network and/or a third neural network based on the second channel sample information. The transceiver module is further configured to send information about the second neural network and/or information about the third neural network to the first device. The second neural network and/or the third neural network are/is used for transmission of target information between the first device and a second device.

According to a ninth aspect, an embodiment of this application provides an apparatus.

In a possible design, the apparatus includes a processor, configured to implement the method described in the first aspect. The apparatus may further include a memory, configured to store instructions and data. The memory is coupled to the processor, and the processor may implement the method described in the first aspect when executing the instructions stored in the memory. The apparatus may further include a communication interface. The communication interface is used by the apparatus to communicate with another device. For example, the communication interface may be a transceiver, a circuit, a bus, a module, or another type of communication interface.

In a possible design, the apparatus includes:

a memory, configured to store program instructions; and
a processor, configured to receive first channel sample information from a second device through a communication interface.

The processor is further configured to determine a first neural network. The first neural network is obtained through training based on the first channel sample information, and is used to perform inference to obtain second channel sample information.

For descriptions of the first neural network, the first channel sample information, the second channel sample information, and other operations, refer to the first aspect. Details are not described herein again.

In a possible design, the apparatus includes a processor, configured to implement the method described in the third aspect. The apparatus may further include a memory, configured to store instructions and data. The memory is coupled to the processor, and the processor may implement the method described in the third aspect when executing the instructions stored in the memory. The apparatus may further include a communication interface. The communication interface is used by the apparatus to communicate with another device. For example, the communication interface may be a transceiver, a circuit, a bus, a module, or another type of communication interface.

In a possible design, the apparatus includes:

a memory, configured to store program instructions; and
a processor, configured to send a first reference signal to the second device through a communication interface, and receive information about the first neural network from the second device. The first neural network is used to perform inference to obtain the second channel sample information.

For descriptions of the first neural network, the first channel sample information, the second channel sample information, and other operations, refer to the third aspect. Details are not described herein again.

According to a tenth aspect, an embodiment of this application provides an apparatus.

In a possible design, the apparatus includes a processor, configured to implement the method described in the second aspect. The apparatus may further include a memory, configured to store instructions and data. The memory is coupled to the processor, and the processor may implement the method described in the second aspect when executing the instructions stored in the memory. The apparatus may further include a communication interface. The communication interface is used by the apparatus to communicate with another device. For example, the communication interface may be a transceiver, a circuit, a bus, a module, or another type of communication interface.

In a possible design, the apparatus includes:

a memory, configured to store program instructions; and

a processor, configured to perform channel estimation based on a first reference signal received from a first device through a communication interface, determine first channel sample information, send the first channel sample information to the first device, and receive information about a third neural network from the first device. The third neural network is used for transmission of target information between the first device and a second device.

For descriptions of the first reference signal, the first channel sample information, the third neural network, and other operations, refer to the second aspect. Details are not described herein again.

In a possible design, the apparatus includes a processor, configured to implement the method described in the fourth aspect. The apparatus may further include a memory, configured to store instructions and data. The memory is coupled to the processor, and the processor may implement the method described in the fourth aspect when executing the instructions stored in the memory. The apparatus may further include a communication interface. The communication interface is used by the apparatus to communicate with another device. For example, the communication interface may be a transceiver, a circuit, a bus, a module, or another type of communication interface.

In a possible design, the apparatus includes:

a memory, configured to store program instructions; and

a processor, configured to perform channel estimation based on the first reference signal received from the first device through a communication interface, determine the first channel sample information, determine a first neural network, and send information about the first neural network to the first device. The first neural network is obtained through training based on the first channel sample information.

For descriptions of the first reference signal, the first channel sample information, the first neural network, and other operations, refer to the fourth aspect. Details are not described herein again.

According to an eleventh aspect, an embodiment of this application provides an apparatus. The apparatus includes a processor, configured to implement the method described in the fifth aspect. The apparatus may further include a memory, configured to store instructions and data. The memory is coupled to the processor, and the processor may implement the method described in the fifth aspect when executing the instructions stored in the memory. The apparatus may further include a communication interface. The communication interface is used by the apparatus to communicate with another device. For example, the communication interface may be a transceiver, a circuit, a bus, a module, or another type of communication interface.

In a possible design, the apparatus includes:

a memory, configured to store program instructions; and

a processor, configured to receive first channel sample information from a first device through a communication interface, and obtain a first neural network through training based on the first channel sample information. The first neural network is used to perform inference to obtain second channel sample information.

In a possible design, the processor is further configured to train a second neural network and/or a third neural network based on the second channel sample information. The processor further sends information about the second neural network and/or information about the third neural network to the first device through the communication interface. The second neural network and/or the third neural network are/is used for transmission of target information between the first device and a second device.

According to a twelfth aspect, an embodiment of this application further provides a computer-readable storage medium, including instructions. When the instructions are run on a computer, the computer is enabled to perform the method in any one of the first aspect to the fifth aspect.

According to a thirteenth aspect, an embodiment of this application further provides a computer program product, including instructions. When the instructions are run on a computer, the computer is enabled to perform the method in any one of the first aspect to the fifth aspect.

According to a fourteenth aspect, an embodiment of this application provides a chip system. The chip system includes a processor, and may further include a memory, configured to implement the method in any one of the first aspect to the fifth aspect. The chip system may include a chip, or may include a chip and another discrete component.

According to a fifteenth aspect, an embodiment of this application further provides a communication system, and the communication system includes:

the apparatus according to the sixth aspect and the apparatus according to the seventh aspect;
the apparatus according to the sixth aspect, the apparatus according to the seventh aspect, and the apparatus according to the eighth aspect;
the apparatus according to the ninth aspect and the apparatus according to the tenth aspect; or
the apparatus according to the ninth aspect, the apparatus according to the tenth aspect, and the apparatus according to the eleventh aspect.

**BRIEF DESCRIPTION OF DRAWINGS**

FIG. 1 is a schematic architectural diagram of a network according to an embodiment of this application;
FIG. 2 is a schematic diagram of a hardware structure of a communication apparatus according to an embodiment of this application;
FIG. 3 is a schematic structural diagram of a neuron according to an embodiment of this application;
FIG. 4 is a schematic diagram of a layer relationship in a neural network according to an embodiment of this application;
FIG. 5 is a schematic diagram of a convolutional neural network CNN according to an embodiment of this application;
FIG. 6 is a schematic diagram of a feedforward neural network RNN according to an embodiment of this application;
FIG. 7 is a schematic diagram of a generative adversarial network GAN according to an embodiment of this application;
FIG. 8 is a schematic diagram of a variational autoencoder according to an embodiment of this application;
FIG. 9 is a schematic architectural diagram of a neural network of constellation modulation/demodulation optimized through joint sending and receiving according to an embodiment of this application;
FIG. 10 to FIG. 12 are schematic flowcharts of a neural network training method according to an embodiment of this application;
FIG. 13 is a schematic structural diagram of a generator network of a first neural network according to an embodiment of this application;
FIG. 14 is a schematic structural diagram of a discriminator network of a first neural network according to an embodiment of this application;
FIG. 15a is a schematic structural diagram of a generator network of a first neural network according to an embodiment of this application;
FIG. 15b is a schematic structural diagram of a discriminator network of a first neural network according to an embodiment of this application;
FIG. 16a and FIG. 16b each are a schematic structural diagram of a network according to an embodiment of this application; and
FIG. 17 is a schematic diagram of a communication apparatus according to an embodiment of this application.

**DESCRIPTION OF EMBODIMENTS**

A wireless communication system includes communication devices, and the communication devices may perform wireless communication by using a radio resource. The communication devices may include an access network device and a terminal device, and the access network device may also be referred to as an access side device. The radio resource may include a link resource and/or an air interface resource. The air interface resource may include at least one of a time domain resource, a frequency domain resource, a code resource, and a space resource. In embodiments of this application, "at least one (type)" may alternatively be described as "one (type) or more (types)", and "a plurality of (types)" may be two (types), three (types), four (types), or more (types). This is not limited in embodiments of this application.

In embodiments of this application, "/" may represent an "or" relationship between associated objects. For example, A/B may represent A or B. "And/or" may be used to indicate that three relationships exist between associated objects. For example, A and/or B may represent the following three cases: Only A exists, both A and B exist, and only B exists. A and B may be singular or plural. To facilitate descriptions of the technical solutions in embodiments of this application, terms such as "first" and "second" may be used to distinguish between technical features with same or similar functions. The terms such as "first" and "second" do not limit a quantity and an execution sequence, and the terms such as "first" and "second" do not indicate a definite difference. In embodiments of this application, the terms such as "example" or "for example" are used to represent an example, an illustration, or a description. Any embodiment or design scheme described with "example" or "for example" should not be explained as being more preferred or having more advantages than another embodiment or design scheme. Use of the terms such as "example" or "for example" is intended to present a related concept in a specific manner for ease of understanding.

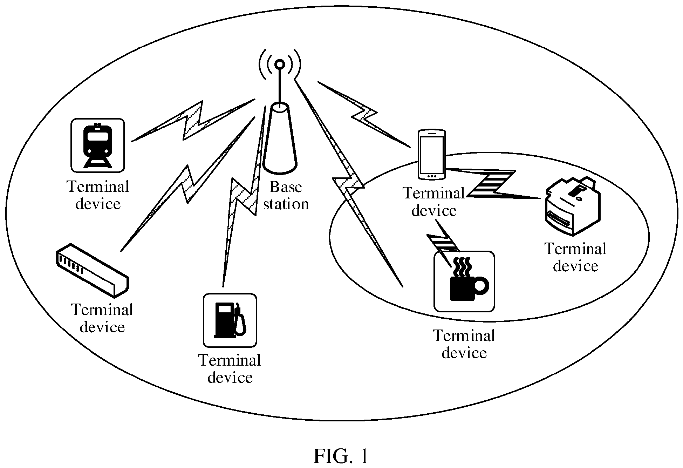

FIG. 1 is a schematic architectural diagram of a network to which an embodiment of this application is applicable. A communication system in embodiments of this application may be a system including the access network device (for example, a base station shown in FIG. 1) and the terminal device, or may be a system including two or more terminal devices. In the communication system, the access network device may send configuration information to the terminal device, and the terminal device performs corresponding configuration based on the configuration information. The access network device may send downlink data to the terminal device, and/or the terminal device may send uplink data to the access network device. In the communication system (for example, internet of vehicles) including two or more terminal devices, a terminal device 1 may send configuration information to a terminal device 2, and the terminal device 2 performs corresponding configuration based on the configuration information. The terminal device 1 may send data to the terminal device 2, and the terminal device 2 may also send data to the terminal device 1. Optionally, in the communication system shown in FIG. 1, the access network device may implement one or more of the following artificial intelligence (artificial intelligence, AI) functions: model training and inference. Optionally, in the communication system shown in FIG. 1, a network side may include a node independent of the access network device, configured to implement one or more of the following AI functions: model training and inference. The node may be referred to as an AI node, a model training node, an inference node, a wireless intelligent controller, or another name. This is not limited. For example, the access network device may implement the model training function and the inference function. Alternatively, the AI node may implement the model training function and the inference function. Alternatively, the AI node may implement the model training function, and send information about the model to the access network device, and the access network device implements the inference function. Optionally, if the AI node implements the inference function, the AI node may send an inference result to the access network device for use by the access network device, and/or the AI node may send the inference result to the terminal device via the access network device for use by the terminal device. If the access network device implements the inference function, the access network device may use the inference result, or send the inference result to the terminal device for use by the terminal device. If the AI node is used to implement the model training function and the inference function, the AI node may be divided into two nodes. One node thereof implements the model training function, and the other node thereof implements the inference function.

A specific quantity of network elements in the communication system is not limited in embodiments of this application.

The terminal device in embodiments of this application may also be referred to as a terminal or an access terminal, and may be a device having a wireless transceiver function. The terminal device may communicate with one or more core networks (core networks, CNs) via the access network device. The terminal device may be a subscriber unit, a subscriber station, a mobile station, a mobile console, a remote station, a remote terminal, a mobile device, a user terminal, user equipment (User Equipment, UE), a user agent, a user apparatus, or the like. The terminal device may be deployed on land, including indoor or outdoor, in a handheld manner or vehicle-mounted manner, may be deployed on water (for example, on a ship), or may be deployed in air (for example, on a plane, a balloon, or a satellite). The terminal device may be a cellular phone (cellular phone), a cordless phone, a session initiation protocol (session initiation protocol, SIP) phone, a smartphone (smartphone), a mobile phone (mobile phone), a wireless local loop (wireless local loop, WLL) station, or a personal digital assistant (personal digital assistant, PDA). Alternatively, the terminal device may be a handheld device, a computing device, or another device having a wireless communication function, a vehicle-mounted device, a wearable device, an unmanned aerial vehicle device, a terminal in internet of things or internet of vehicles, a terminal in a fifth generation (fifth generation, 5G) mobile communication network, relay user equipment, or a terminal in a future evolved mobile communication network, or the like. The relay user equipment may be, for example, a 5G residential gateway (residential gateway, RG). For another example, the terminal device may be a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. This is not limited in embodiments of this application. In embodiments of this application, an apparatus configured to implement a function of the terminal may be a terminal, or may be an apparatus that can support the terminal in implementing the function, for example, a chip system. The apparatus may be installed in the terminal or used with the terminal. In embodiments of this application, the chip system may include a chip, or may include a chip and another discrete component.

The access network device may be considered as a sub-network of a carrier network, and is an implementation system between a service node in the carrier network and the terminal device. To access the carrier network, the terminal device may first pass through the access network device, and then may be connected to the service node in the carrier network via the access network device. The access network device in embodiments of this application is a device that is located in a (radio) access network ((radio) access network, (R)AN) and that can provide the wireless communication function for the terminal device. The access network device includes a base station, and includes but is not limited to, for example, a next generation NodeB (next generation NodeB, gNB) in a 5G system and an evolved NodeB (evolved NodeB, eNB) in a long term evolution (long term evolution, LTE) system, a radio network controller (RNC), a NodeB (NodeB, NB), a base station controller (base station controller, BSC), a base transceiver station (base transceiver station, BTS), a home base station (for example, home evolved NodeB, or home NodeB, HNB), a base band unit (base band unit, BBU), a transmitting and receiving point (transmitting and receiving point, TRP), a transmitting point (transmitting point, TP), a pico (pico) base station device, a mobile switching center, and an access network device in a future network. In systems using different radio access technologies, devices having a function of the access network device may have different names. In embodiments of this application, an apparatus configured to implement the function of the access network device may be an access network device, or may be an apparatus that can support the access network device in implementing the function, for example, a chip system. The apparatus may be installed in the access network device or used with the access network device.

The technical solutions provided in embodiments of this application may be applied to various communication systems, for example, an LTE system, a 5G system, a wireless-fidelity (wireless-fidelity, Wi-Fi) system, a future sixth generation mobile communication system, or a system integrating a plurality of communication systems. This is not limited in embodiments of this application. 5G may also be referred to as new radio (new radio, NR).

The technical solutions provided in embodiments of this application may be applied to various communication scenarios, for example, may be applied to one or more of the following communication scenarios: enhanced mobile broadband (enhanced mobile broadband, eMBB) communication, ultra-reliable low-latency communication (ultra-reliable low-latency communication, URLLC), machine type communication (machine type communication, MTC), massive machine type communication (massive machine type communication, mMTC), device-to-device (device-to-device, D2D) communication, vehicle to everything (vehicle to everything, V2X) communication, vehicle to vehicle (vehicle to vehicle, V2V) communication, internet of things (internet of things, IoT), and the like. In embodiments of this application, the term "communication" may also be described as "transmission", "information transmission", "data transmission", "signal transmission", or the like. The transmission may include sending and/or receiving. In embodiments of this application, communication between the access network device and the terminal device is used as an example to describe the technical solutions. A person skilled in the art may also apply the technical solutions to other communication between a scheduling entity and a subordinate entity, for example, communication between a macro base station and a micro base station, and/or communication between a terminal device 1 and a terminal device 2.

In addition, network architectures and service scenarios described in this application are intended to describe the technical solutions in this application more clearly, and do not constitute a limitation on the technical solutions provided in this application. A person skilled in the art may know that as the network architectures evolve and a new service scenario emerges, the technical solutions provided in this application are also applicable to similar technical problems.

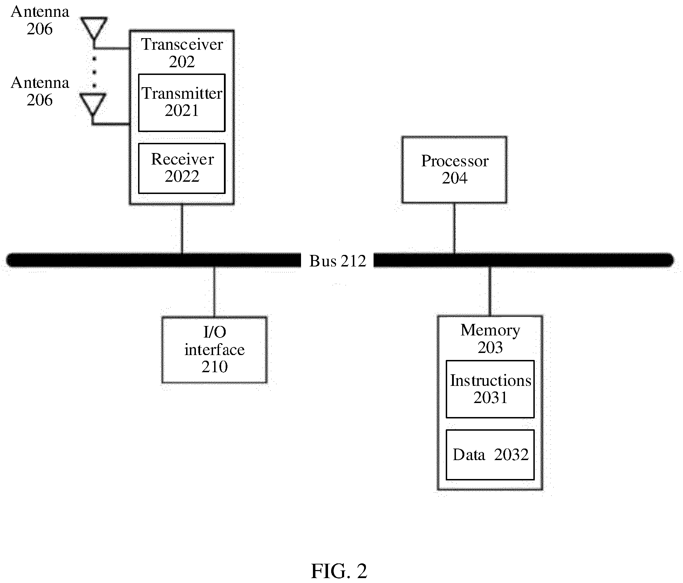

FIG. 2 is a schematic diagram of a hardware structure of a communication apparatus according to an embodiment of this application. The communication apparatus may be a possible implementation of an AI node, an access network device, or a terminal device in embodiments of this application. The communication apparatus may be the AI node, may be an apparatus in the AI node, or may be an apparatus that can be used with the AI node. The communication apparatus may be the access network device, an apparatus in the access network device, or an apparatus that can be used with the access network device. The communication apparatus may be the terminal device, an apparatus in the terminal device, or an apparatus that can be used with the terminal device. The apparatus may be a chip system. In embodiments of this application, the chip system may include a chip, or may include a chip and another discrete component. A connection in embodiments of this application may be an indirect coupling or a communication connection between apparatus, units, or modules in an electrical form, a mechanical form, or another form, and is used for information exchange between the apparatus, the units, or the modules.

As shown in FIG. 2, the communication apparatus includes at least one processor 204, configured to implement the technical solutions provided in embodiments of this application. Optionally, the communication apparatus may further include a memory 203. The memory 203 is configured to store instructions 2031 and/or data 2032. The memory 203 is connected to the processor 204. The processor 204 may cooperate with the memory 203. The processor 204 may execute the instructions stored in the memory 203, to implement the technical solutions provided in embodiments of this application. The communication apparatus may further include a transceiver 202, configured to receive and/or send a signal. Optionally, the communication apparatus may further include one or more of the following: antennas 206, an I/O (input/output, Input/Output) interface 210, and a bus 212. The transceiver 202 further includes a transmitter 2021 and a receiver 2022. The processor 204, the transceiver 202, the memory 203, and the I/O interface 210 are communicatively connected to each other through the bus 212, and the antennas 206 are connected to the transceiver 202. The bus 212 may include an address bus, a data bus, and/or a control bus. In FIG. 2, only one thick line is used to represent the bus 212, but it does not indicate that the bus 212 has only one bus or one type of bus.

The processor 204 may be a general-purpose processor, a digital signal processor, an application-specific integrated circuit, a field programmable gate array and/or another programmable logic device, for example, a discrete gate or a transistor logic device, and/or a discrete hardware component. The general-purpose processor may be a microprocessor, any conventional processor, or the like. The processor 204 may implement or perform the methods, steps, and logical block diagrams disclosed in embodiments of this application. The steps in the methods disclosed with reference to embodiments of this application may be performed and completed by a hardware processor, or may be performed and completed by a combination of hardware and a software module in the processor. For example, the processor 204 may be a central processing unit (Central Processing Unit, CPU), or may be a dedicated processor, for example, but not limited to, a digital signal processor (Digital Signal Processor, DSP), an application-specific integrated circuit (Application-Specific Integrated Circuit, ASIC), and/or a field programmable gate array (Field Programmable Gate Array, FPGA). The processor 204 may alternatively be a neural processing unit (neural processing unit, NPU). In addition, the processor 204 may alternatively be a combination of a plurality of processors. In the technical solutions provided in embodiments of this application, the processor 204 may be configured to perform related steps in subsequent method embodiments. The processor 204 may be a processor that is specially designed to perform the foregoing steps and/or operations, or may be a processor that performs the foregoing steps and/or operations by reading and executing the instructions 2031 stored in the memory 203. The processor 204 may need to use the data 2032 in a process of performing the foregoing steps and/or operations.

The transceiver 202 includes the transmitter 2021 and the receiver 2022. In an optional implementation, the transmitter 2021 is configured to send a signal through at least one of the antennas 206. The receiver 2022 is configured to receive a second reference signal through at least one of the antennas 206.

In embodiments of this application, the transceiver 202 is configured to support the communication apparatus in performing a receiving function and a sending function. A processor having a processing function is considered as the processor 204. The receiver 2022 may also be referred to as an input port, a receiver circuit, a receive bus, or another apparatus for implementing the receiving function, or the like. The transmitter 2021 may be referred to as a transmit port, a transmitter circuit, a transmit bus, or another apparatus for implementing the transmitting function, or the like. The transceiver 202 may also be referred to as a communication interface.

The processor 204 may be configured to execute the instructions stored in the memory 203, for example, to control the transceiver 202 to receive a message and/or send a message, to complete functions of the communication apparatus in the method embodiments of this application. In an implementation, it may be considered that a function of the transceiver 202 is implemented by using a transceiver circuit or a dedicated transceiver chip. In embodiments of this application, that the transceiver 202 receives a message may be understood as that the transceiver 202 inputs a message, and that the transceiver 202 sends a message may be understood as that the transceiver 202 outputs a message.

The memory 203 may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store the program instructions and/or the data. The memory 203 is specifically configured to store the instructions 2031 and the data 2032. The processor 204 may perform the steps and/or the operations in the method embodiments of this application by reading and executing the instructions 2031 stored in the memory 203. The data 2032 may need to be used in a process of performing the operations and/or the steps in the method embodiments of this application.

Optionally, the communication apparatus may further include the I/O interface 210. The I/O interface 210 is configured to receive instructions and/or data from a peripheral device, and output instructions and/or data to the peripheral device.

The following describes some concepts in embodiments of this application.

Machine learning (machine learning, ML) has attracted wide attention in academia and industry in recent years. Due to great advantages of machine learning in addressing structured information and massive data, many researchers in the communication field also focus on machine learning. Machine learning-based communication technologies have great potential in signal classification, channel estimation, and/or performance optimization, and the like. Most communication systems are designed block by block, which means that these communication systems are formed by a plurality of modules. For a communication architecture based on a module design, many technologies may be developed to optimize performance of each module. However, the optimal performance of each module does not mean the optimal performance of the entire communication system. End-to-end optimization (namely, optimization of the entire communication system) is better than optimization of a single model. Machine learning provides an advanced and powerful tool for maximizing end-to-end performance as much as possible. In a wireless communication system, in a complex and large-scale communication scenario, a channel status changes rapidly. A plurality of conventional communication models, for example, a massive multiple-input multiple-output (multiple-input multiple-output, MIMO) model, heavily rely on channel state information, and performance of the communication models deteriorates in nonlinear time-varying channels. Therefore, accurate acquisition of channel state information (channel state information, CSI) of the time-varying channels is very important for system performance. By using a machine learning technology, a communication system may learn a sudden change channel model and feed back a channel state in time.

Based on the foregoing considerations, the use of the machine learning technology in wireless communication can adapt to a new requirement in a future wireless communication scenario.

Machine learning is an important technical way to implement artificial intelligence. Machine learning may include supervised learning, unsupervised learning, and reinforcement learning.

In terms of supervised learning, based on collected sample values and sample labels, a mapping relationship between the sample values and the sample labels is learned by using a machine learning algorithm, and the learned mapping relationship is expressed by using a machine learning model. The sample label may also be referred to as a label for short. A process of training a machine learning model is a process of learning the mapping relationship. For example, during signal detection, a received signal including noise is a sample, and a real constellation point corresponding to the signal is a label. Machine learning expects to learn a mapping relationship between the sample and the label through training. In other words, a machine learning model is enabled to learn a signal detector. During training, a model parameter is optimized by calculating an error between a predicted value of a model and an actual label. After learning the mapping relationship, a sample label of a new sample may be predicted based on the learned mapping. The mapping relationship learned through supervised learning may include linear mapping or non-linear mapping. A learning task may be classified into a classification task and a regression task based on a type of a label.

In terms of unsupervised learning, an internal pattern of a sample is explored autonomously by using an algorithm based on a collected sample value. In unsupervised learning, a sample is used as a supervised signal in a type of algorithm, in other words, a model learns a mapping relationship between a sample and a sample, which is also referred to as self-supervised learning. During training, a model parameter is optimized by calculating an error between a predicted value of a model and a sample. For example, self-supervised learning may be used for signal compression and decompression restoration. Common algorithms include an autoencoder, a generative adversarial network, and the like.

Reinforcement learning is different from supervised learning, and is an algorithm that learns a policy of resolving problems by interacting with an environment. Different from supervised learning and unsupervised learning, reinforcement learning does not have clear "correct" action label data. The algorithm needs to interact with the environment to obtain a reward signal fed back by the environment and adjust a decision action to obtain a larger reward signal value. For example, in downlink power control, a reinforcement learning model adjusts a downlink transmit power of each user based on a total system throughput fed back by a wireless network, to expect to obtain a higher system throughput. The goal of reinforcement learning is also to learn a mapping relationship between an environment status and an optimal decision action. However, a label of "correct action" cannot be obtained in advance. Therefore, a network cannot be optimized by calculating an error between an action and the "correct action". Reinforcement learning training is implemented through iterative interaction with the environment.

A deep neural network (deep neural network, DNN) is a specific implementation form of machine learning. According to a universal approximation theorem, the DNN may theoretically approximate to any continuous function, so that the DNN can learn any mapping. A conventional communication system needs to design a communication module with rich expert knowledge. However, a DNN-based deep learning communication system may automatically discover an implicit pattern structure from a large quantity of data sets, establish a mapping relationship between data, and obtain performance better than that of a conventional modeling method.

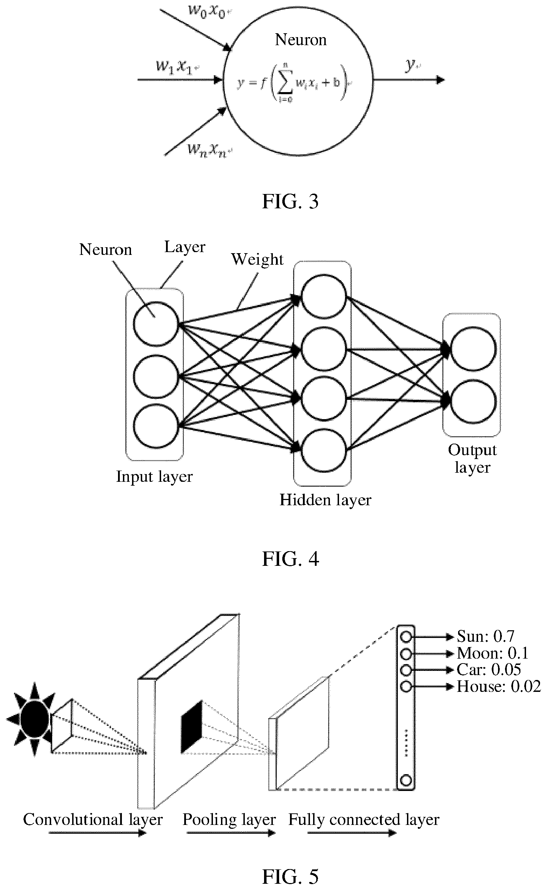

The idea of the DNN comes from a neuron structure of a brain tissue. Each neuron performs a weighted summation operation on an input value of the neuron, and outputs a result of the weighted summation through an activation function. FIG. 3 is a schematic structural diagram of a neuron. It is assumed that an input of a neuron is $x = [x_0, x_1, \dots x_n]$, a weight corresponding to the input is $w = [w_0, w_1, \dots w_n]$, an offset of weighted summation is b, and forms of an activation function may be diversified. For example, if the activation function of a neuron is $y = f(x) = \max\{0, x\}$, an output of execution of a neuron is $y = f(\sum_{i=0}^{n} w_i x_i + b) = \max\{0, \sum_{i=0}^{n} w_i x_i + b\}$. $w_i x_i$ represents a product of $w_i$ and $x_i$, a data type of b is an integer or a floating point number, and a data type of $w_i$ is an integer or a floating point number. The DNN usually has a multi-layer structure. Each layer of the DNN may include one or more neurons. An input layer of the DNN processes a received value by using a neuron, and then transfers the processed value to an intermediate hidden layer. Similarly, the hidden layer transfers a calculation result to an adjacent next hidden layer or an adjacent output layer, to generate a final output of the DNN. FIG. 4 is a schematic diagram of a layer relationship in a neural network.

The DNN usually includes one or more hidden layers, and the hidden layer may affect capabilities of extracting information and fitting a function. Increasing a quantity of hidden layers of the DNN or increasing a quantity of neurons at each layer can improve a function fitting capability of the DNN. A parameter of each neuron includes a weight, an offset, and an activation function. A set including parameters of all neurons in the DNN is referred to as a DNN parameter (or referred to as a neural network parameter). The weight and the offset of the neuron may be optimized in a training process, so that the DNN has capabilities of extracting a data feature and expressing a mapping relationship. The DNN usually optimizes the neural network parameter by using a supervised learning or non-supervised learning policy.

Based on a network construction manner, the DNN may include a feedforward neural network (feedforward neural network, FNN), a convolutional neural network (convolutional neural network, CNN), and a recurrent neural network (recurrent neural network, RNN).

FIG. 4 shows an FNN, and the FNN is characterized in that neurons at adjacent layers are completely connected. Consequently, the FNN usually requires a large amount of storage space, resulting in high computational complexity.

FIG. 5 is a schematic diagram of a CNN. The CNN is a neural network used to process data of a similar grid structure. For example, both time series data (timeline discrete sampling) and image data (two-dimensional discrete sampling) may be considered as the data of the similar grid structure. The CNN performs a convolution operation by capturing partial information through a window (for example, a window with a fixed size) rather than performing an operation by using all input information at one time, which greatly reduces a calculation amount of the neural network parameter. In addition, based on different types of information captured by the window (where for example, a person and an object in a same image are information of different types), each window may use different convolution kernel operations, so that the CNN can better extract a feature of input data. A convolution layer is used to perform feature extraction to obtain a feature map. A pooling layer is used to compress the input feature map to reduce the feature map, to simplify network calculation complexity. A fully connected layer is used to map learned "distributed feature representations" to a sample label space. For example, in FIG. 5, a probability of determining that the image is the sun is 0.7, a probability of determining that the image is the moon is 0.1, a probability of determining that the image is a car is 0.05, and a probability of determining that the image is a house is 0.02.

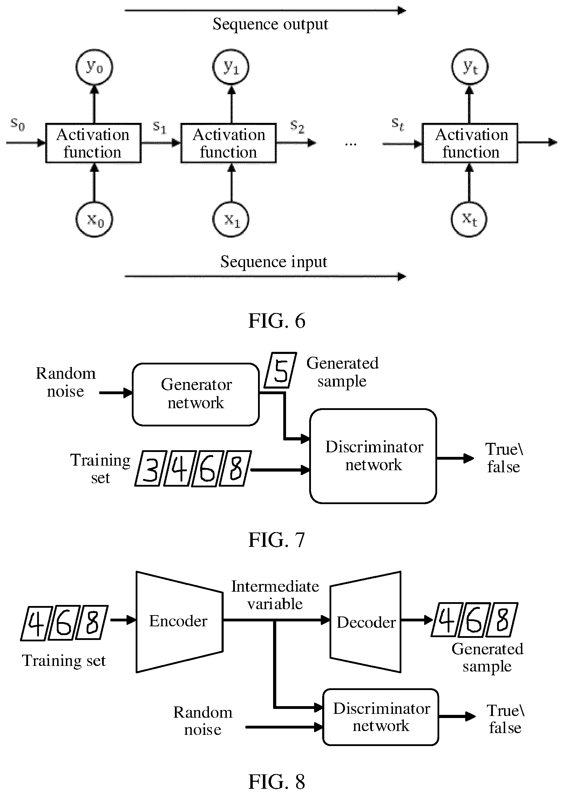

FIG. 6 is a schematic diagram of an RNN. The RNN is a type of DNN that uses feedback time series information, and an input of the RNN includes a new input value at a current moment and an output value of the RNN at a previous moment. The RNN is suitable for obtaining a sequence feature having a time correlation, and is especially suitable for applications such as speech recognition and channel encoding and decoding. Refer to FIG. 6. Inputs of one neuron at a plurality of moments generate a plurality of outputs. For example, at the $0^{th}$ moment, inputs are $x_0$ and $s_0$, and outputs are $y_0$ and $s_1$; at the $1^{st}$ moment, inputs are $x_1$ and $s_1$, and outputs are $y_1$ and $s_2$, ...; and at the $t^{th}$ moment, inputs are $x_t$ and $s_t$, and outputs are $y_t$ and $s_{t+1}$.

A generative neural network (generative neural network) is a special type of deep learning neural network. Different from a classification task and a prediction task that are mainly performed by a common neural network, the generative neural network may learn a probability distribution function that a group of training samples obey. Therefore, the generative neural network may be used to model a random variable, and may be used to establish a conditional probability distribution between variables. A common generative neural network includes a generative adversarial network (generative adversarial network, GAN) and a variational autoencoder (variational autoencoder, VAE).

FIG. 7 is a schematic diagram of a generative adversarial network GAN. The GAN network may include two parts based on functions: a generator network (referred to as a generator for short) and a discriminator network (referred to as a discriminator for short). Specifically, the generator network processes input random noise, and outputs generated samples. The discriminator network compares the generated samples output by the generator network with training samples in a training set, determines whether the generated samples and the training samples approximately obey a similar probability distribution, and outputs determining of true or false. For example, the generated samples and the training samples obey a normal distribution. When a mean value of the generated samples is consistent with a mean value of the training samples, and when a difference between a variance of the generated samples and a variance of the training samples is less than a threshold (for example, 0.01), it is considered that the generated samples and the training samples obey a similar probability distribution. There is a game relationship between the generator network and the discriminator network, where the generator network expects to generate samples that obey a distribution of the training set as much as possible, and the discriminator network expects to distinguish a difference between the generated samples and the training set as much as possible. Through joint training of the generator network and the discriminator network, the two can reach a balanced state. To be specific, a probability distribution obeyed by the generated samples output by the generator network is similar to a probability distribution obeyed by the training samples, and the discriminator network considers that the generated samples and the training set obey a similar distribution. Optionally, the similar distribution may be referred to as an identical distribution.

FIG. 8 is a schematic diagram of a variational autoencoder. The VAE may include three parts based on functions: an encoder network (referred to as an encoder for short), a decoder network (referred to as a decoder for short), and a discriminator network (referred to as a discriminator for short). The encoder network compresses an input sample in a training set into an intermediate variable, and the decoder network attempts to restore the intermediate variable to the sample in the training set. In addition, a form of the intermediate variable may be restricted. Similar to a discriminator network in a GAN, a discriminator network may also be used in the VAE to determine whether the intermediate variable obeys a distribution of random noise. Through joint training of the encoder network, the decoder network and the discriminator network, the decoder network may use the input random noise to generate a generated sample that obeys a distribution of a training set.

The foregoing FNN, CNN, RNN, GAN, and VAE are neural network structures, and these network structures are constructed based on neurons.

Thanks to advantages of machine learning in modeling and information feature extraction, machine learning-based communication solutions may be designed, and good performance can be achieved. The solutions include but are not limited to CSI compression feedback, adaptive constellation point design, and/or robust precoding, and the like. In these solutions, a sending or receiving module in an original communication system is replaced with a neural network model, to optimize transmission performance or reduce processing complexity. To support different application scenarios, different neural network model information may be predefined or preconfigured, so that the neural network model can adapt to requirements of different scenarios.

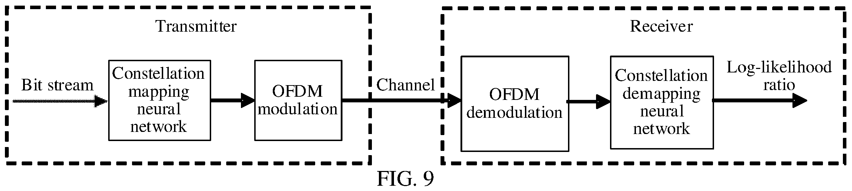

In embodiments of this application, in a neural network based communication system, some communication modules of an access network device and/or a terminal device may use the neural network model. FIG. 9 is a schematic architectural diagram of a neural network of constellation modulation/demodulation optimized through joint sending and receiving. Both a constellation mapping neural network at a transmitter (also referred to as a transmitting end) and a constellation demapping neural network at a receiver (also referred to as a receiving end) use a neural network model. The constellation mapping neural network at the transmitting end maps a bit stream into a constellation symbol, and the constellation demapping neural network demaps (or demodulates) the received constellation symbol into a log-likelihood ratio of bit information. By collecting channel data to train a neural network, optimal end-to-end communication performance may be implemented. In a communication system, a transmitting end performs a series of processing on a to-be-sent bit stream. The processing may include one or more of the following: channel encoding, constellation symbol mapping modulation, orthogonal frequency division multiplexing (orthogonal frequency division multiplexing, OFDM) modulation, layer mapping, precoding, up-conversion, and the like. For ease of description, only the constellation symbol mapping modulation and the OFDM modulation are shown in FIG. 9.

It should be noted that the neural network in embodiments of this application is not limited to any specific application scenario, but may be used in any communication scenario, such as CSI compressed feedback, adaptive constellation point design, and/or robust precoding.

Adaptive training is needed for the neural network to ensure communication performance. For example, for each different wireless system parameter (including one or more of a radio channel type, a bandwidth, a quantity of antennas at the receiving end, a quantity of antennas at the transmitting end, a modulation order, a quantity of paired users, a channel encoding method, and a code rate), a set of neural network model information (including neural network structure information and a neural network parameter) corresponding to the wireless system parameter is defined. An artificial intelligence (artificial intelligence, AI) --based adaptive modulation constellation design is used as an example. When there is one antenna at the transmitting end and two antennas at the receiving end, a set of neural network model information is needed to generate a corresponding modulation constellation. When there is one antenna at the transmitting end and four antennas at the receiving end, another set of neural network model information is needed to generate a corresponding modulation constellation. Similarly, different radio channel types, bandwidths, modulation orders, quantities of paired users, channel encoding methods, and/or code rates may correspond to different neural network model information.

To enable the neural networks (at the receiving end and the transmitting end) implement good performance in an actual channel condition, actual channel sample information needs to be used for joint training when the neural networks are trained. Usually, a larger quantity of channel sample information used during training indicates a better training effect. Sources of the channel sample information include: 1. obtained by the receiving end based on actual measurement; 2. generated by using a mathematical (channel) model.

Details are as follows: 1. A signal receiver (for example, UE) (for example, a reference signal or a synchronization signal) measures a real channel to obtain the channel sample information. The channel sample information can accurately reflect a channel environment. If a network element that is used to train a neural network by using the channel sample information is a signal transmitter, the receiver feeds back the channel sample information to the transmitter (for example, a base station) after obtaining the channel sample information through measurement. The transmitter trains the neural network based on the channel sample information. To improve a training effect and performance of a neural network obtained through training, the signal receiver needs to feed back a large quantity of channel sample information to the signal transmitter. However, feeding back a large quantity of channel sample information occupies a large quantity of air interface resources, and affects data transmission efficiency between the transmitter and the receiver.

2. In a possible implementation, for different channel types, a channel model may be modeled by using a mathematical expression. In other words, a mathematical (channel) model is used to simulate a real channel. For example, mathematical channel models such as a tapped delay line (tapped delay line, TDL) and a cluster delay line (cluster delay line, CDL) may be defined in a protocol. Each channel type may be further subdivided into a plurality of subtypes. For example, the TDL channel and the CDL channel each have five subtypes: A, B, C, D, and E. Each subtype is further subdivided into a plurality of typical channel scenarios based on specific parameters. For example, a subtype is subdivided into a plurality of typical scenarios such as 10 nanoseconds (ns), 30 ns, 100 ns, 300 ns, or 1000 ns based on a multipath delay interval. Therefore, when training the neural networks at the receiving end and the transmitting end, a mathematical channel model similar to an actual environment may be selected to generate a large quantity of channel sample information similar to an actual channel, and the channel sample information is used for training.

Although signaling overheads for obtaining a channel sample may be greatly reduced via the mathematical channel model, there is also a disadvantage that the mathematical channel model is mismatched with the actual channel model. For example, the TDL channel model assumes a limited quantity of reflection paths, and a channel coefficient of each path obey a simple Rayleigh distribution. However, the quantity of reflection paths of the actual channel varies in different environments, and the Rayleigh distribution cannot accurately describe a distribution of the channel coefficient of each path. In addition, a multipath delay interval varies with scenarios, and a rough division into several typical values inevitably leads to modeling errors. Therefore, it is difficult to accurately describe the actual channel model by using a mathematical channel modeling method, and a training effect of the neural network is affected. In other words, there is a problem of data model mismatch.

In conclusion, how to generate channel sample information close to an actual channel scenario on a premise of saving air interface resources becomes an urgent problem to be resolved currently.

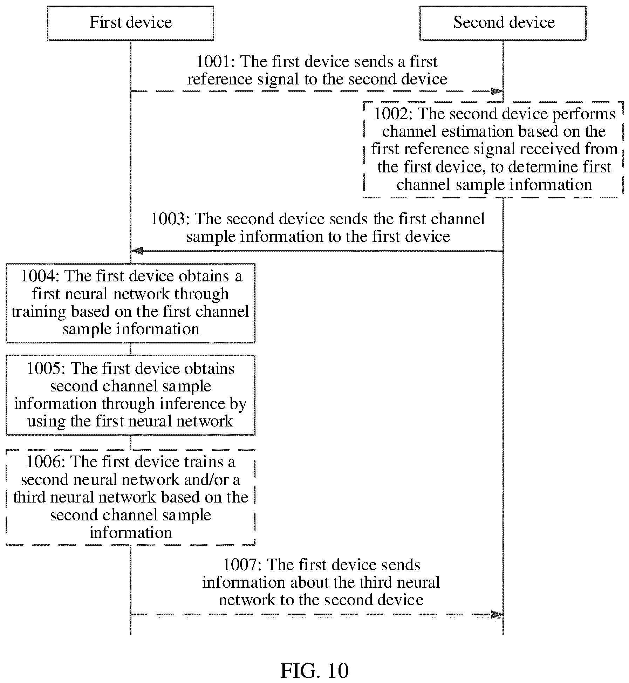

The following describes the technical solutions provided in this application with reference to the accompanying drawings. FIG. 10 is a schematic flowchart of a neural network training method according to an embodiment of this application. The neural network training method provided in this embodiment of this application includes: Optionally, 1001: A first device sends a first reference signal to a second device.

In this embodiment, an example in which the first device is an access network device and the second device is a terminal device is used for description. It may be understood that the first device may be the access network device or a chip in the access network device, and the second device may be the terminal device or a chip in the terminal device. Alternatively, the first device may be the terminal device or a chip in the terminal device, and the second device may be the access network device or a chip in the access network device. This is not limited herein.

The first device sends the first reference signal to the second device. The first reference signal may be a synchronization signal, a synchronization signal and PBCH block (synchronization signal and PBCH block, SSB), a demodulation reference signal (demodulation reference signal, DMRS), a channel state information reference signal (channel state information reference signal, CSI-RS), or the like. The first reference signal may also be referred to as a first signal. Alternatively, the first reference signal may be a newly defined reference signal. This is not limited herein. A sequence type of the first reference signal includes but is not limited to a ZC (zadoff-chu) sequence or a gold (gold) sequence. Optionally, the DMRS may be a physical downlink control channel (physical downlink control channel, PDCCH) DMRS or a physical downlink shared channel (physical downlink shared channel, PDSCH) DMRS.

Optionally, before step 1001, when the second device needs to use a neural network (where the neural network used by the second device is referred to as a third neural network), the second device sends capability information to the first device. The capability information indicates one or more of the following information about the second device:

(1) Whether to support using the neural network to replace or implement a function of a communication module. The communication module includes but is not limited to an OFDM modulation module, an OFDM demodulation module, a constellation mapping module, a constellation demapping module, a channel encoding module, a channel decoding module, a precoding module, an equalization module, an interleaving module, and/or a de-interleaving module.

(2) Whether to support a network type of the third neural network, or indicate a network type of a supported third neural network.

The network type of the third neural network includes one or more of the following: a fully connected neural network, a radial basis function neural network, a convolutional neural network, a recurrent neural network, a Hopfield neural network, a restricted Boltzmann machine, a deep belief network, or the like; and the third neural network may be any one of the foregoing neural networks, or the third neural network may be a combination of the foregoing neural networks, and this is not limited herein.

(3) Whether to support receiving information about the third neural network using signaling.

(4) Stored preconfigured third neural network.

For example, if the predefined or preconfigured third neural network already exists in the second device, the capability information may carry an identifier or an index of the third neural network.

Optionally, the capability information may further carry an identifier or an index of another predefined or preconfigured neural network that already exists in the second device.

(5) Memory space for storing the third neural network.

(6) Computing power information that may be used to run the neural network.

The computing power information is computing power information for running the neural network, for example, including information such as a computing speed of a processor and/or an amount of data that can be processed by the processor. Optionally, 1002: The second device performs channel estimation based on the first reference signal received from the first device, to determine first channel sample information.

In this embodiment, after receiving the first reference signal, the second device performs channel estimation on the first reference signal, to determine the first channel sample information.

Specifically, for ease of description, a signal received at the second device is referred to as a second reference signal, where the signal is the first reference signal that undergoes transmission over a channel. It is assumed that the first reference signal is x and the second reference signal is y, and the channel for propagating the first reference signal may be understood as a function having a transition probability P(y|x).

The second device may preconfigure information about the first reference signal for the first device using signaling, or may agree on information about the first reference signal in a protocol. This is not limited. In this embodiment of this application, a type of the signaling is not limited, for example, may be a broadcast message, system information, radio resource control (radio resource control, RRC) signaling, a media access control (media access control, MAC) control element (control element, CE), or downlink control information (downlink control information, DCI).

Because the second device already knows in advance the information about the first reference signal x sent by the first device, the second device performs channel estimation based on the second reference signal y and the sent first reference signal x after receiving the second reference signal y, to determine the first channel sample information. In this case, the channel experienced by the first reference signal from being sent to being received may be estimated, for example, an amplitude change and a phase rotation experienced by the first reference signal. The first channel sample information includes but is not limited to the second reference signal and/or channel state information (channel state information, CSI).

A channel estimation algorithm used when the second device performs channel estimation includes but is not limited to a least square (least square, LS) estimation method or a linear minimum mean square error (linear minimum mean square error, LMMSE) estimation method.

1003: The second device sends the first channel sample information to the first device.

In this embodiment, the second device sends the first channel sample information to the first device.

1004: The first device obtains a first neural network through training based on the first channel sample information.

In this embodiment, the first device obtains the first neural network through training based on the first channel sample information. The first neural network is used to generate new channel sample information.

Optionally, the first neural network is a generative neural network. In this embodiment of this application, an example in which the first neural network is a GAN is used for description. It may be understood that the first neural network may be another type of neural network, for example, a VAE. This is not limited herein. The first neural network includes a generator network and a discriminator network based on function division. The generator network is used to generate second channel sample information, and the discriminator network is used to determine whether the newly generated second channel sample information and the first channel sample information from the second device obey a similar probability statistical feature. The generator network and the discriminator network of the first neural network are jointly trained by using a machine learning method, so that the second channel sample information output by the generator network may be converged to a probability distribution of the first channel sample information from the second device. The following separately provides examples for description.

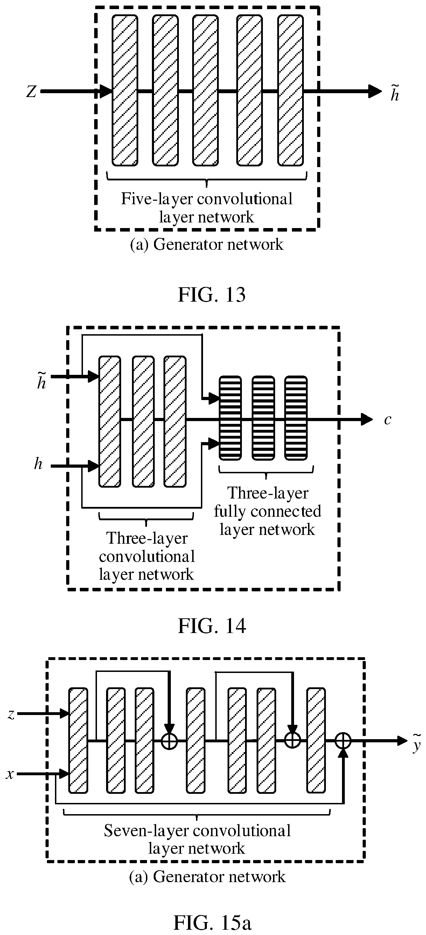

For example, when the first channel sample information is CSI (denoted CSI as h), for a schematic structural diagram of the first neural network, refer to FIG. 13 and FIG. 14. FIG. 13 is a schematic structural diagram of a generator network of a first neural network according to an embodiment of this application. FIG. 14 is a schematic structural diagram of a discriminator network of a first neural network according to an embodiment of this application. In the first neural network shown in FIG. 13 and FIG. 14, the generator network includes a five-layer convolutional layer network. An input of the generator network is random noise z, and the random noise includes but is not limited to white Gaussian noise. An output of the generator network is second channel sample information $\tilde{h}$. The discriminator network includes a three-layer convolutional layer network and a three-layer fully connected layer network. A part of an input of the discriminator network is output information $\tilde{h}$ of the generator network, and another part of the input signal of the discriminator network includes first channel sample information h from the second device. An output c of the discriminator network is a binary variable, and represents whether the second channel sample information output by the generator network obeys a probability distribution of a first channel sample, in other words, whether $\tilde{h}$ obeys a probability distribution of h.

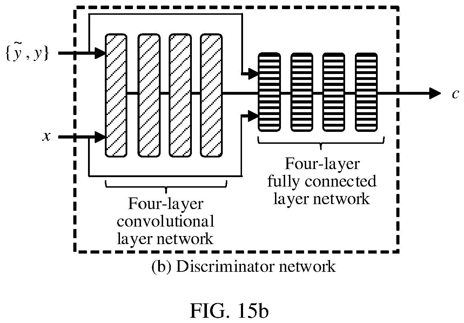

For example, when the first channel sample information is the second reference signal (y) described above, for a schematic structural diagram of the first neural network, refer to FIG. 15a and FIG. 15b. FIG. 15a is a schematic structural diagram of a generator network of a first neural network according to an embodiment of this application. FIG. 15b is a schematic structural diagram of a discriminator network of a first neural network according to an embodiment of this application.

In the first neural network shown in FIG. 15a and FIG. 15b, the generator network includes a seven-layer convolutional layer network. An input of the generator network includes random noise z and a training sequence x, and an output is a sample $\tilde{y}$. The discriminator network includes a four-layer convolutional layer network and a four-layer fully connected layer network. An input of the discriminator network includes the sample $\tilde{y}$ generated by the generator network, a sample from the second device, namely, the second reference signal y, and a corresponding first reference signal x. An output c of the discriminator network is a binary variable, and represents whether $P(\tilde{y}|x)$ obeys a probability distribution of $P(y|x)$.

It is assumed that the first reference signal sent by the first device is x, and after the first reference signal is propagated through a channel, the second reference signal received by the second device is y. In this case, the channel may be understood as a function of a transition probability $P(y|x)$. The first neural network expects to learn a probability transition feature of the channel, and for each input x, an output y can be generated with a probability of $P(y|x)$. In other words, the first neural network simulates a process in which a signal is propagated through the channel.

Specifically, the first device uses first channel sample information to train the reference neural network. A neural network obtained after the training is completed is referred to as the first neural network. In embodiments of this application, for ease of description, a neural network used before the first channel sample information is used for training may be referred to as the reference neural network. For example, the first device trains the reference neural network by using first channel sample information that is from the second device and that includes 5000 samples, to obtain the first neural network through training.

In an optional implementation, the reference neural network may preconfigure parameters of some neurons or a structure of the neural network. The reference neural network may further preconfigure information about another neural network. This is not limited herein. For example, the reference neural network may be a neural network that is obtained through training in a predefined channel environment and that is used to generate channel sample information (for example, the CSI or the second reference signal). The first device further trains the reference neural network by using the first channel sample information, to obtain the first neural network through training.

In another optional implementation, the reference neural network may be an initialized neural network. For example, a parameter of each neuron in the reference neural network is zero, a random value, or another agreed value, and/or a structure of the neural network is a random or an agreed initial structure. This is not limited herein. The first device starts to train the reference neural network by using the first channel sample information, to obtain the first neural network through training.

1005: The first device performs inference to obtain the second channel sample information by using the first neural network.

In this embodiment, after obtaining the trained first neural network, the first device performs inference to obtain the second channel sample information by using the first neural network.

For example, the first device inputs random noise into the first neural network, and the second channel sample information may be obtained through inference by using the first neural network. For example, when the first neural network is a GAN, the random noise is input into the generator network of the first neural network, to obtain the second channel sample information. For another example, when the first neural network is a VAE, the random noise is input into a decoder network of the first neural network, to obtain the second channel sample information.

A form of the second channel sample information is the same as a form of the first channel sample information. For example, when the first channel sample information is the CSI (h), the second channel sample information is CSI ($\tilde{h}$). When the first channel sample information is the second reference signal (y), the second channel sample information is a second reference signal ($\tilde{y}$). Optionally, 1006: The first device trains a second neural network and/or the third neural network based on the second channel sample information.

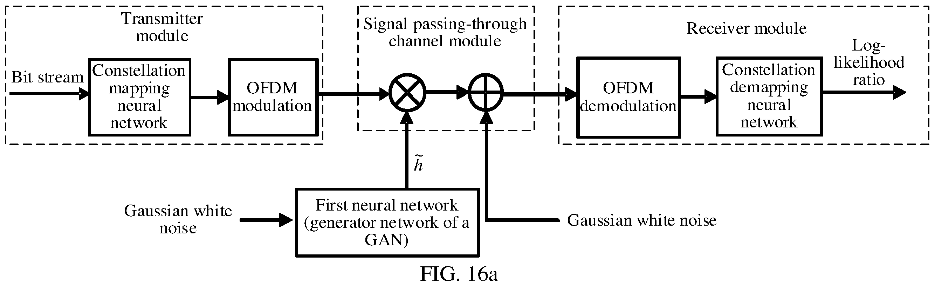

For example, when the first channel sample information is the CSI (denoted the CSI as h), for a schematic structural diagram of the first device training the second neural network and/or the third neural network based on the second channel sample information, refer to FIG. 16a. An input of the first neural network (the generator network of the GAN) is white Gaussian noise, and an output of the first neural network is the second channel sample information $\tilde{h}$. The second channel sample information $\tilde{h}$ and the white Gaussian noise are input into a signal passing-through channel module. For example, in the signal passing-through channel module in FIG. 16a, a transmitting end signal is multiplied by the second sample information $\tilde{h}$, a product result is added to the Gaussian white noise, and a result of adding the product result to the Gaussian white noise is used as an input of the receiver. A neural network (for example, a constellation demapping neural network) at the receiver and a neural network (constellation mapping neural network) at the transmitter may be trained in an end-to-end manner by using a machine learning method.

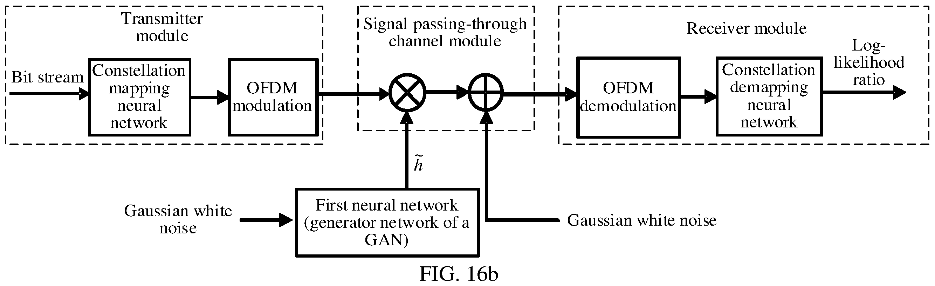

For example, when the first channel sample information is the second reference signal (y) described above, for a schematic structural diagram of the first device training the second neural network and/or the third neural network based on the second channel sample information, refer to FIG. 16b. Inputs of the first neural network (the generator network of the GAN) are Gaussian white noise and a sending signal x, and an output of the first neural network is the second reference signal $\tilde{y}$. The first neural network is connected between the receiver and the transmitter, a neural network (for example, a constellation demapping neural network) at the receiver and a neural network (constellation mapping neural network) at the transmitter may be trained in an end-to-end manner. In this embodiment, after generating the second channel sample information based on the first neural network, the first device trains the second neural network and/or the third neural network based on the second channel sample information. The second neural network and/or the third neural network are/is used for transmission of target information between the first device and the second device.

Optionally, the first device trains the second neural network and/or the third neural network based on the first channel sample information and the second channel sample information.

The following describes the second neural network and the third neural network separately.

In this embodiment of this application, that the second neural network is used in the transmitter may be understood as that the second neural network performs data sending processing, for example, the constellation mapping neural network shown in FIG. 9. Optionally, the second neural network may perform operations such as rate matching (Rate matching) and/or OFDM modulation. The rate matching (Rate matching) indicates that a to-be-sent bit is repeated and/or punctured (punctured), to match a bearer capability of a physical channel, so that a bit rate required by a transmission format is implemented during channel mapping. The OFDM modulation mainly moves a baseband spectrum onto a radio frequency band to implement wireless transmission. For example, the second neural network may perform one or more functions of source encoding (for example, scrambling and/or signal compression), channel encoding, constellation mapping, OFDM modulation, precoding, and/or filtering.

A network type of the second neural network includes but is not limited to: a fully connected neural network, a radial basis function (radial basis function, RBF) neural network, a CNN, a recurrent neural network, a Hopfield neural network, a restricted Boltzmann machine, a deep belief network, or the like. The second neural network may be any one of the foregoing neural networks, or the second neural network may be a combination of the foregoing neural networks. This is not limited herein.

In this embodiment of this application, for ease of description, the first device is used as the transmitter for description, in other words, the second neural network is used in the first device. It may be understood that the second device may also be used as the transmitter, in other words, the second neural network is used in the second device.

In this embodiment of this application, that the third neural network is used in the receiver may be understood as that the third neural network performs receiving processing on data from the transmitter, for example, the constellation demapping neural network shown in FIG. 9. Specifically, the third neural network may perform processing such as source decoding (for example, descrambling and/or signal decompression), channel decoding, constellation demapping, OFDM demodulation, signal detection and/or equalization (equalization).

A network type of the third neural network includes but is not limited to: a fully connected neural network, a radial basis function neural network, a convolutional neural network, a recurrent neural network, a Hopfield neural network, a restricted Boltzmann machine, a deep belief network, or the like. The third neural network may be any one of the foregoing neural networks, or the third neural network may be a combination of the foregoing neural networks. This is not limited herein.

It should be noted that the second neural network and the third neural network may use a same neural network, may use different neural networks, or may use partially same neural networks. This is not limited herein.

In this embodiment of this application, for ease of description, the second device is used as the receiver for description, in other words, the third neural network is used in the second device. It may be understood that the first device may alternatively be used as the receiver, in other words, the third neural network is used in the first device.

The second neural network and/or the third neural network are/is used for transmission of target information between the first device and the second device. Based on the foregoing descriptions, it may be understood that when the second neural network and the third neural network perform different processing, the target information is different.

For example, when the second neural network is a constellation mapping neural network, and the third neural network is a constellation demapping neural network, the target information is a modulation symbol sequence.

For example, when the second neural network is a CSI compression neural network, and the third neural network is a CSI decompression neural network, the target information is compressed CSI or CSI.

For example, when the second neural network is a channel encoding neural network, and the third neural network is a channel decoding neural network, the target information is to-be-sent bit information before encoding or to-be-sent bit information after encoding.

For example, when the second neural network is an OFDM modulation neural network, and the third neural network is an OFDM demodulation neural network, the target information is an OFDM symbol.

For example, when the second neural network is a precoding neural network, and the third neural network is an equalizer neural network, the target information is a sending signal, and the sending signal arrives at the receiver after being transmitted through a channel.

The first device may independently train the second neural network, independently train the third neural network, or jointly train the second neural network and the third neural network.

For example, when the second neural network is a precoding neural network at the transmitter (for example, the first device), the first device may independently train the second neural network. A function of the precoding neural network is to generate a transmitting weighting coefficient of each transmitting antenna based on a spatial feature of a channel, so that a plurality of transmitting data streams may be spatially isolated, and a receiving signal to interference plus noise ratio of a signal may be improved. An input of the precoding neural network is CSI of a channel, and an output of the precoding neural network is a precoding weight on each transmitting antenna. In other words, the target information of the second neural network is the precoding weight on each transmitting antenna.

For example, when the third neural network is an equalizer neural network at the receiver (for example, the second device), the first device may independently train the third neural network. A function of the equalizer neural network is to cancel a distortion effect caused by a channel to a propagated signal, and recover a signal transmitted by the transmitter. An input of the equalizer neural network is CSI of a channel and a second reference signal at the receiver, and an output of the equalizer neural network is a signal recovered after equalization. In other words, the target information of the third neural network is the signal recovered after equalization.

The first device may independently train the second neural network by using the second channel sample information generated by the first neural network, or may independently train the third neural network by using the second channel sample information and locally generated sending data, and send information about a trained third neural network to the second device for use. The first device may further jointly train the second neural network and the third neural network, to implement optimal end-to-end communication performance.

After completing the training of the third neural network, the first device may perform step 1007. The completion of the training of the third neural network includes but is not limited to: A quantity of training samples for training reaches a preset threshold. For example, if a quantity of second channel sample information for training the third neural network reaches 45000, it is considered that the training of the third neural network is completed. Alternatively, if a quantity of times of training reaches a preset threshold. For example, if a quantity of times of training the third neural network reaches 30000, it is considered that the training of the third neural network is completed.

Optionally, 1007: The first device sends the information about the third neural network to the second device.

In this embodiment, after completing the training of the third neural network, the first device sends the information about the third neural network to the second device. The information about the third neural network includes but is not limited to: a weight of a neural network, an activation function of a neuron, a quantity of neurons at each layer of the neural network, an inter-layer cascading relationship of the neural network, and/or a network type of each layer of the neural network. For example, the information about the third neural network may indicate a same activation function or different activation functions for different neurons. This is not limited.

Optionally, when the third neural network is preconfigured (or predefined) in the second device, the information about the third neural network may alternatively be a model variation of the third neural network. The model variation includes but is not limited to: a weight of a changed neural network, a changed activation function, a quantity of neurons at each layer of the changed neural network, an inter-layer cascading relationship of the changed neural network, and/or a network type of each layer of the changed neural network. For example, the pre-configuration may be performed on the terminal device by the access network device using signaling, and the pre-definition may be performed in a protocol. For example, the third neural network in the terminal device is predefined as a neural network A in the protocol.

The first device sends the information about the third neural network to the second device using signaling.

In this embodiment of this application, the signaling includes but is not limited to a broadcast message (for example, a master information block (master information block, MIB)), a system message (for example, a system information block (system information block, SIB)), radio resource control (radio resource control, RRC) signaling, a medium access control control element (medium access control control element, MAC CE), and/or downlink control information (downlink control information, DCI). The MAC CE and/or the DCI may be a common message/common messages of a plurality of devices, or may be a specific message/specific messages specific to a device (for example, a second device).

The second device uses the third neural network in the second device based on the information about the third neural network. After completing the training of the second neural network, the first device uses the second neural network.

When the second neural network is preconfigured (or predefined) in the first device, the first device updates the local second neural network based on the training result in step 1006. When the third neural network is preconfigured in the second device, the second device updates the local third neural network based on the information about the third neural network in step 1007. When there is no third neural network in the second device, the information about the third neural network in step 1007 may include a complete third neural network. The second device locally configures the trained third neural network based on the information about the third neural network.

Then, if the target information is downlink information, the first device may process the target information (namely, an input of the second neural network) or obtain the target information (namely, an output of the second neural network) by using the second neural network. The second device may process the target information (namely, an input of the third neural network) or restore the target information (namely, an output of the third neural network) by using the third neural network. For example, the first device obtains a modulation symbol by using the second neural network, and the second device recovers a bit from the received modulation symbol by using the third neural network.

If the target is uplink information, the second device may process the target information (namely, an input of the third neural network) or obtain the target information (namely, an output of the third neural network) by using the third neural network. The first device may process the target information (namely, an input of the second neural network) or restore the target information (namely, an output of the second neural network) by using the second neural network. For example, the second device compresses CSI by using the third neural network, to obtain the compressed CSI. The first device recovers the CSI from the received compressed CSI by using the second neural network.

In this embodiment of this application, the second device (for example, the terminal device) may send a small quantity of first channel sample information to the first device (for example, the access network device). The first device obtains the first neural network through training based on the first channel sample information. The first neural network is used to perform inference to obtain the second channel sample information. The first device trains the second neural network and/or the third neural network based on the second channel sample information or based on the second channel sample information and the first channel sample information. The second neural network and/or the third neural network are/is used for transmission of target information between the first device and the second device. According to this method, air interface signaling overheads can be effectively reduced, and a channel environment in which a trained neural network is located can be adapted. The second neural network and the third neural network obtained through training are closer to an actual channel environment, and communication performance is improved. A speed of training the second neural network and the third neural network is also greatly improved.

Similar to FIG. 10, a related step of obtaining the first neural network through training, a related training step of the second neural network, and/or a related training step of the third neural network may alternatively be implemented by another device independent of the first device. In this embodiment of this application, for ease of description, the another device is referred to as a third device. The third device may be the foregoing AI node, a mobile edge computing (mobile edge computing) device, a cloud server, or the like. This is not limited. A reference signal pool obtained by the third device through learning may be agreed in a protocol after offline learning, sent to the first device through an interface between the third device and the first device, or forwarded to the first device via another network element. This is not limited. A sample, for example, the first channel sample information, that needs to be used when the third device performs model training may be directly or indirectly sent by the first device to the third device, or may be directly or indirectly sent by the second device to the third device. This is not limited.

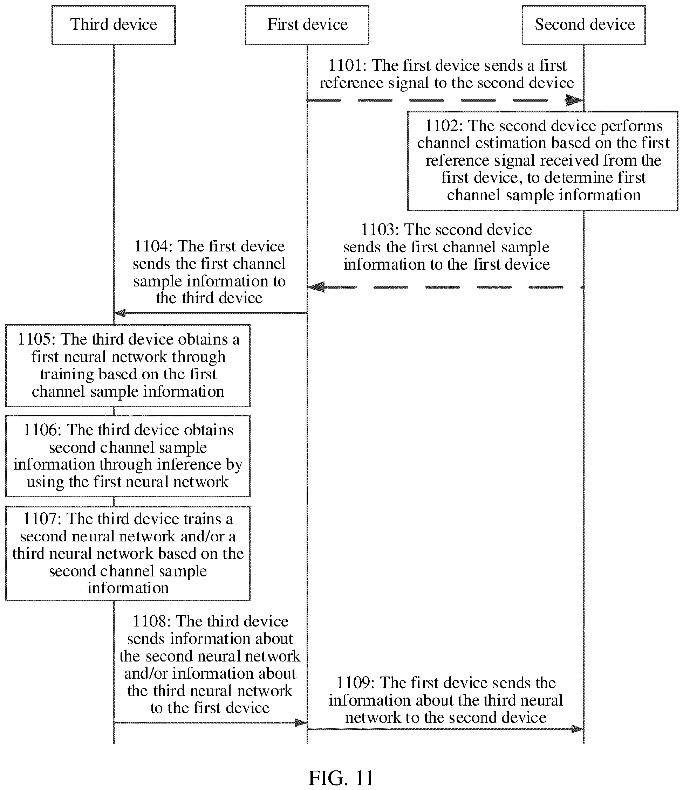

FIG. 11 is another schematic flowchart of a neural network training method according to an embodiment of this application. The neural network training method provided in this embodiment of this application includes:

Optionally, 1101: A first device sends a first reference signal to a second device.

1102: The second device performs channel estimation based on the first reference signal received from the first device, to determine first channel sample information.

Optionally, 1103: The second device sends the first channel sample information to the first device.

Steps 1101 to 1103 are the same as the foregoing steps 1001 to 1003, and details are not described herein again.

1104. The first device sends the first channel sample information to a third device.

In this embodiment, after receiving the first channel sample information from the second device, the first device sends the first channel sample information to the third device.

1105: The third device obtains a first neural network through training based on the first channel sample information.

1106: The third device performs inference to obtain second channel sample information by using the first neural network. Optionally, 1106 may be replaced with: The third device sends information about the first neural network to the first device. The first device performs inference to obtain the second channel sample information by using the first neural network. Optionally, the first device sends the second channel sample information to the third device.

1107: The third device trains a second neural network and/or a third neural network based on the second channel sample information. Steps 1105 to 1107 are similar to the foregoing steps 1004 to 1006, and details are not described herein again.

1108: The third device sends information about the second neural network and/or information about the third neural network to the first device.

In this embodiment, after obtaining the third neural network through training, the third device may send the information about the third neural network to the second device by using the first device. Optionally, the third device may send the information about the third neural network to the first device by using another device (for example, another access network device). Optionally, if a direct communication link exists between the third device and the first device, the third device may further directly send the information about the third neural network to the first device.

After obtaining the second neural network through training, the third device may send the information about the second neural network to the second device.

1109: The first device sends the information about the third neural network to the second device.

Step 1109 is the same as step 1007, and details are not described herein again.

Optionally, the embodiment shown in FIG. 11 may be replaced with the following: A body used to train the first neural network is different from a body used to train the second neural network and/or the second neural network. For example, the former is the first device, and the latter is the third device. Alternatively, the former is the third device, and the latter is the first device.

In this embodiment of this application, training a neural network in the foregoing manner, air interface signaling overheads are effectively reduced, and a channel environment in which a trained neural network is located can be adapted. The second neural network and the third neural network obtained through training are closer to an actual channel environment, and communication performance is improved. A speed of training the second neural network and the third neural network is also greatly improved. Steps related to neural network training may be performed by another device (the third device), to effectively reduce computing load and power consumption of the first device (for example, an access network device).

Similar to FIG. 10 or FIG. 11, steps related to obtaining the first neural network through training may alternatively be implemented by the second device (for example, a terminal device).

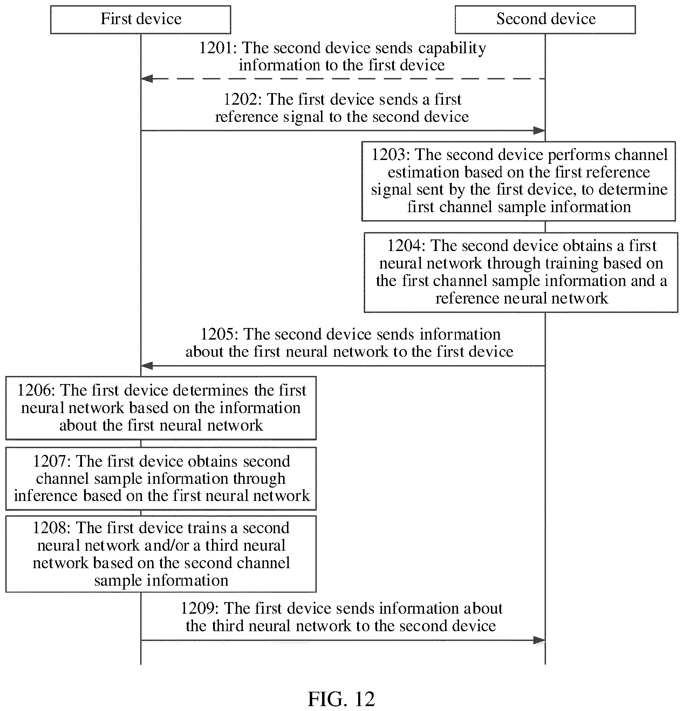

FIG. 12 is another schematic flowchart of a neural network training method according to an embodiment of this application. In this method, a first neural network is trained by a second device. The neural network training method provided in this embodiment of this application includes:

Optionally, 1201: The second device sends capability information to a first device.

In this embodiment, similar to the embodiments shown in FIG. 10 and FIG. 11, an example in which the first device is an access network device and the second device is a terminal device is used for description. The first device may be the access network device, a chip in the access network device, a module or a circuit in the access network device, or the like, and the second device may be the terminal device, a chip in the terminal device, a module or a circuit in the terminal, or the like. Alternatively, the first device may be the terminal device, a chip in the terminal device, a module or a circuit in the terminal, or the like, and the second device may be the access network device, a chip in the access network device, a module or a circuit in the access network device, or the like. This is not limited herein.

In embodiments of this application, for ease of description, a first neural network that is not trained by using first channel sample information or a first neural network that is not updated may be referred to as a reference neural network. After the reference neural network is trained by using the first channel sample information, the first neural network is obtained.

The reference neural network is similar to the reference neural network in step 1004. The second device starts to train the reference neural network by using the first channel sample information, to obtain the first neural network through training.

In step 1201, the second device sends the capability information to the first device. The capability information indicates one or more of the following information:

(1) Whether to support using the neural network to replace or implement a function of a communication module. The communication module includes but is not limited to an OFDM modulation module, an OFDM demodulation module, a constellation mapping module, a constellation demapping module, a channel encoding module, a channel decoding module, a precoding module, an equalization module, an interleaving module, and/or a de-interleaving module.

(2) Whether to support a network type of the first neural network, or indicate a network type of a supported first neural network. For example, the capability information indicates whether the second device supports a VAE or whether the second device supports a GAN. For another example, the capability information indicates that the second device supports the GAN, supports the VAE, supports the GAN and the VAE, or does not support the GAN or the VAE.

(3) Whether to support a network type of a third neural network, or indicate a network type of a supported third neural network. The network type of the third neural network includes one or more of the following: a fully connected neural network, a radial basis function neural network, a convolutional neural network, a recurrent neural network, a Hopfield neural network, a restricted Boltzmann machine, a deep belief network, or the like; and the third neural network may be any one of the foregoing neural networks, or the third neural network may be a combination of the foregoing neural networks, and this is not limited herein.

(4) Whether to support receiving information about the reference neural network using signaling, where the reference neural network is the first neural network not trained by using the first channel sample information or is used to train the first neural network.

(5) Whether to support receiving information about the third neural network using signaling.

(6) Stored preconfigured reference neural network.

For example, if the predefined or preconfigured reference neural network already exists in the second device, the capability information may carry an identifier or an index of the reference neural network.

Optionally, the capability information may further carry an identifier or an index of another predefined or preconfigured neural network that already exists in the second device.

(7) Memory space for storing the first neural network and/or the third neural network.

(8) Computing power information that may be used to run the neural network.

The computing power information means computing power information for running the neural network, for example, includes information such as a computing speed of a processor and/or an amount of data that can be processed by the processor. (9) Location information of the second device.

For example, the longitude, the latitude, and/or the altitude of the second device are reported, and for another example, a channel environment of the second device is reported, for example, an office, a subway station, a park, or a street.

The capability information includes but is not limited to the foregoing information. For example, the capability information may further include a type of channel sample information that is supported by the second device and that is used to obtain the first neural network through training. For example, the channel sample information that is supported by the second device (the terminal device) and that is used to obtain the first neural network through training is CSI, or the channel sample information that is supported by the second device and that is used to obtain the first neural network through training is a second reference signal (y).

Step 1201 is an optional step. When step 1201 is performed, the second device may send the capability information when accessing the first device for the first time, or the second device may periodically send the capability information to the first device. This is not limited herein.

Optionally, after the first device receives the capability information from the second device, and when the capability information indicates that no reference neural network is configured (stored) in the second device, the first device may send the information about the reference neural network to the second device. The information about the reference neural network includes: a weight of a neural network, an activation function of a neuron, a quantity of neurons at each layer of the neural network, an inter-layer cascading relationship of the neural network, and/or a network type of each layer of the neural network. The information about the reference neural network may be referred to as specific information about the reference neural network. Activation functions of different neurons may be the same, or may be different. This is not limited.

Optionally, 1202: The first device sends a first reference signal to the second device.

This is the same as the foregoing step 1001, and details are not described herein again.

Optionally, 1203: The second device performs channel estimation based on the first reference signal received from the first device, to determine the first channel sample information.

Same as step 1002, details are not described herein again.

1204: The second device obtains the first neural network through training based on the first channel sample information.

The method in which the second device obtains the first neural network through training based on the first channel sample information is similar to the method in 1004 in which the first device obtains the first neural network through training based on the first channel sample information. Details are not described herein.

For example, the second device obtains the first neural network through training based on the first channel sample information and the reference neural network.

Optionally, the second device may determine the reference neural network in any one of the following manners 1 to 3:

Manner 1: The information about the reference neural network is agreed in a protocol, or the second device determines the information about the reference neural network.

In a possible implementation, the information about a reference neural network is agreed (predefined) in the protocol, in other words, the specific information about the reference neural network is agreed.

In embodiments of this application, the information about the reference neural network includes: a weight of a neural network, an activation function of a neuron, a quantity of neurons at each layer of the neural network, an inter-layer cascading relationship of the neural network, and/or a network type of each layer of the neural network. The information about the reference neural network may further be referred to as the specific information about the reference neural network. Activation functions of different neurons may be the same, or may be different. This is not limited.

In a possible implementation, information about a plurality of reference neural networks is agreed in the protocol. Each reference neural network corresponds to a channel environment. The channel environment includes one or more of the following: an office, an indoor site of a shopping mall, a subway station, a city street, a square, a suburb, and the like. As described above, the second device reports the location information of the second device to the first device, and the first device may determine the channel environment in which the second device is located, to obtain a reference neural network corresponding to the channel environment. For example, the access network device may maintain one piece of map information, and corresponding channel environments corresponding to different location information are marked in the map information. For example, the map information is shown in Table 1:

**Table 1**

| Location information/ {longitude, latitude, altitude} | Channel environment |
|---|---|
| {x1, y1, z1} | Office |
| {x2, y2, z2} | Subway station |
| {x3, y3, z3} | Park |
| {x4, y4, z4} | Street |

Optionally, if the second device reports the location information of the second device, namely, the channel environment of the second device, to the first device by using the capability information, the first device may determine the information about the reference neural network corresponding to the channel environment.

In a possible implementation, the second device determines the information about the reference neural network, in other words, determines the specific information about the reference neural network. As described above, the second device may report the information about the reference neural network to the first device by using the capability information.

Manner 2: The reference neural network is indicated by the first device for the second device.

In a possible implementation, the first device sends the information about the reference neural network to the second device, in other words, the first device sends the specific information about the reference neural network to the second device.

In a possible implementation, information about a plurality of candidate reference neural networks is agreed in the protocol, and each candidate reference neural network corresponds to a unique index. The first device sends an identifier to the second device using signaling. The identifier indicates an index of a reference neural network that is of the plurality of candidate reference neural networks and that is configured for the second device.

In a possible implementation, the first device configures the information about the plurality of candidate reference neural networks for the second device by using first signaling. In other words, the first device configures specific information about the plurality of candidate reference neural networks. Each candidate reference neural network corresponds to a unique index. The first device sends an identifier to the second device by using second signaling. The identifier indicates an index of a reference neural network that is of the plurality of candidate reference neural networks and that is configured for the second device.

In a possible implementation, as described above, the second device may send, to the first device by using the capability information, information about the plurality of candidate reference neural networks stored or owned by the second device. Each candidate reference neural network corresponds to a unique index. The first device sends an identifier to the second device using signaling. The identifier indicates an index of a reference neural network that is of the plurality of candidate reference neural networks and that is configured for the second device.

In a possible implementation, the first device sends a type of the reference neural network to the second device using signaling. Information about various types of reference neural networks is agreed in the protocol, or is determined by the second device independently.

1205: The second device sends information about the first neural network to the first device.

After obtaining the first neural network through training, the second device sends the information about the first neural network to the first device.

Optionally, the information about the first neural network may be specific information about the first neural network. The specific information may include: a weight of a neural network, an activation function of a neuron, a quantity of neurons at each layer of the neural network, an inter-layer cascading relationship of the neural network, and/or a network type of each layer of the neural network. Activation functions of different neurons may be the same, or may be different. This is not limited.

Optionally, the information about the first neural network may alternatively be a model variation of the first neural network relative to the reference neural network. The model variation includes but is not limited to: a weight of a changed neural network, a changed activation function, a quantity of neurons at one or more layers of the changed neural network, an inter-layer cascading relationship of the changed neural network, and/or a network type of one or more layers of the changed neural network. When the information about the first neural network is the model variation, air interface signaling overheads can be effectively reduced.

1206: The first device determines the first neural network based on the information about the first neural network.

The first device determines the first neural network based on the information about the first neural network from the second device. Optionally, when the information about the first neural network is the specific information about the first neural network, the first device determines the first neural network based on the specific information.

Optionally, when the information about the first neural network is the model variation, the first device determines the first neural network based on the model variation and the reference neural network.

1207: The first device performs inference to obtain second channel sample information based on the first neural network.

1208: The first device trains a second neural network and/or the third neural network based on the second channel sample information.

1209: The first device sends the information about the third neural network to the second device.

Steps 1207 to 1209 are the same as the foregoing steps 1005 to 1007, and details are not described herein again.

In this embodiment, the second device obtains the first neural network through training based on the first channel sample information and the reference neural network.

In this embodiment, the second device (for example, the terminal device) obtains the first neural network through training based on the first channel sample information. The first neural network is used to perform inference to obtain the second channel sample information. The first device trains the second neural network and/or the third neural network based on the second channel sample information. The second neural network and/or the third neural network are/is used for transmission of target information between the first device and the second device. Air interface signaling overheads are effectively reduced, and a channel environment in which a trained neural network is located can be adapted. The second neural network and the third neural network obtained through training are closer to an actual channel environment, and communication performance is improved. A speed of training the second neural network and the third neural network is also greatly improved. A computing task for training the first neural network is allocated to the second device, to effectively reduce computing burden of the first device (for example, the access network device), and improve communication performance.

In the foregoing embodiments provided in this application, the methods provided in embodiments of this application are separately described from perspectives of the first device, the second device, the third device, and interaction between the first device, the second device, and the third device. To implement functions in the methods provided in embodiments of this application, the first device, the second device, and the third device may include a hardware structure and/or a software module, and implement the foregoing functions in a form of a hardware structure, a software module, or a hardware structure plus a software module. Whether a function in the foregoing functions is performed by using a hardware structure, a software module, or a hardware structure plus a software module depends on a specific application and a design constraint condition of the technical solution.

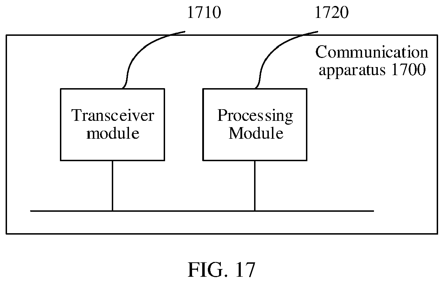

FIG. 17 is a schematic diagram of a communication apparatus according to an embodiment of this application. The communication apparatus 1700 includes a transceiver module 1710 and a processing module 1720.

Optionally, the communication apparatus 1700 is configured to implement the function of the first device in the foregoing method embodiments.

In a possible implementation, the transceiver module 1710 is configured to send a first reference signal to a second device.

The transceiver module 1710 is further configured to receive first channel sample information from the second device.

The processing module 1720 is configured to determine a first neural network. The first neural network is obtained through training based on the first channel sample information, and is used to perform inference to obtain second channel sample information. The second channel sample information is used to train a second neural network and/or a third neural network, and the second neural network and/or the third neural network are/is used for transmission of target information between the first device and the second device.

In a possible implementation, the transceiver module 1710 is configured to send the first reference signal to the second device. The transceiver module 1710 is further configured to receive information about the first neural network from the second device.

The processing module 1720 is configured to determine the second neural network and/or the third neural network. The second neural network and/or the third neural network are/is used for transmission of target information between the first device and the second device, and are/is obtained through training based on the second channel sample information; and the second channel sample information is obtained through inference by using the first neural network.

Optionally, the communication apparatus 1700 is configured to implement the function of the second device in the foregoing method embodiments.

In a possible implementation, the processing module 1720 is configured to perform channel estimation based on the first reference signal received from the first device, to determine the first channel sample information.

The transceiver module 1710 is configured to send the first channel sample information to the first device.

The transceiver module 1710 is further configured to receive information about the third neural network from the first device. The third neural network is used for transmission of target information between the first device and the second device.

In a possible implementation, the processing module 1720 is configured to perform channel estimation based on the first reference signal received from the first device, to determine the first channel sample information.

The processing module 1720 is further configured to determine the first neural network. The first neural network is obtained through training based on the first channel sample information.

The transceiver module 1710 is configured to send the information about the first neural network to the first device.

Optionally, the communication apparatus 1700 is configured to implement the function of the third device in the foregoing method embodiments.

In a possible implementation, the transceiver module 1710 is configured to receive the first channel sample information from the first device.

The processing module 1720 is configured to determine the first neural network. The first neural network is obtained through training based on the first channel sample information, and is used to perform inference to obtain the second channel sample information. The second channel sample information is used to train the second neural network and/or the third neural network, and the second neural network and/or the third neural network are/is used for transmission of target information between the first device and the second device.

Optionally, the communication apparatus may further include a storage unit. The storage unit may store data and/or instructions (or may be referred to as code or a program). The foregoing units may interact with or be coupled to the storage unit, to implement a corresponding method or function. For example, the processing unit 1720 may read data or instructions in the storage unit, so that the communication apparatus implements the methods in the foregoing embodiments. The coupling in embodiments of this application may be an indirect coupling or a communication connection between apparatus, units, or modules in an electrical form, a mechanical form, or another form, and is used for information exchange between the apparatus, the units, or the modules. Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

In an example, the units in the foregoing communication apparatus may be one or more integrated circuits configured to implement the foregoing methods, for example, one or more application-specific integrated circuits (application-specific integrated circuits, ASICs), or one or more microprocessors (digital signal processors, DSPs), or one or more field programmable gate arrays (field programmable gate arrays, FPGAs), or a combination of at least two of these integrated circuit forms. For another example, when the units in the communication apparatus may be implemented in a form of scheduling a program by a processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SOC).

All or a part of the technical solutions provided in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, an AI node, an access network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, when there is no logical conflict, embodiments may be mutually referenced. For example, methods and/or terms in the method embodiments may be mutually referenced, and functions and/or terms in the apparatus embodiments may be mutually referenced. For example, functions and/or terms between the apparatus embodiments and the method embodiments may be mutually referenced.

It is clearly that, a person skilled in the art may make various modifications and variations to this application without departing from the scope of this application. This application is intended to cover these modifications and variations of this application provided that they fall within the scope of protection defined by the following claims and their equivalent technologies.

**Claims**

1. A neural network training method, comprising:

   sending, by a first device, a first reference signal to a second device;
   receiving, by the first device, first channel sample information from the second device; and
   determining, by the first device, a first neural network, wherein the first neural network is obtained through training based on the first channel sample information, and is used to perform inference to obtain second channel sample information, wherein the second channel sample information is used to train a second neural network and/or a third neural network, and the second neural network and/or the third neural network are/is used for transmission of target information between the first device and the second device.

2. The method according to claim 1, wherein the first channel sample information is further used to train the second neural network and/or the third neural network.

3. The method according to claim 1 or 2, wherein the method further comprises:
   sending, by the first device, information about the third neural network to the second device.

4. The method according to any one of claims 1 to 3, wherein the first channel sample information comprises channel state information CSI and/or a second reference signal, and the second reference signal is the first reference signal propagated through a channel.

5. The method according to any one of claims 1 to 4, wherein the first neural network is a generative adversarial network or a variational autoencoder.

6. The method according to any one of claims 1 to 5, wherein the first reference signal comprises a demodulation reference signal DMRS or a channel state information reference signal CSI-RS.

7. The method according to any one of claims 1 to 6, wherein a sequence type of the first reference signal comprises a ZC sequence or a gold sequence.

8. A neural network training method, comprising:

   performing, by a second device, channel estimation based on a first reference signal received from a first device, to determine first channel sample information;
   sending, by the second device, the first channel sample information to the first device; and
   receiving, by the second device, information about a third neural network from the first device, wherein the third neural network is used for transmission of target information between the first device and the second device.

9. The method according to claim 8, wherein the first channel sample information comprises channel state information CSI and/or a second reference signal, and the second reference signal is the first reference signal received by the second device.

10. The method according to claim 8 or 9, wherein a first neural network is a generative adversarial network or a variational autoencoder.

11. The method according to any one of claims 8 to 10, wherein the first reference signal comprises a demodulation reference signal DMRS or a channel state information reference signal CSI-RS.

12. The method according to any one of claims 8 to 11, wherein a sequence type of the first reference signal comprises a ZC sequence or a gold sequence.

13. A neural network training method, comprising:

   sending, by a first device, a first reference signal to a second device;
   receiving, by the first device, information about a first neural network from the second device; and
   determining, by the first device, a second neural network and/or a third neural network, wherein the second neural network and/or the third neural network are/is used for transmission of target information between the first device and the second device, and are/is obtained through training based on second channel sample information, and the second channel sample information is obtained through inference by using the first neural network.

14. The method according to claim 13, wherein the information about the first neural network comprises a model variation of the first neural network relative to a reference neural network, and the reference neural network is used to train the first neural network.

15. The method according to claim 13, wherein the information about the first neural network comprises one or more of the following: a weight of a neural network, an activation function of a neuron, a quantity of neurons at each layer of the neural network, an inter-layer cascading relationship of the neural network, and a network type of each layer of the neural network.

16. The method according to any one of claims 13 to 15, wherein the method further comprises:

    sending, by the first device, information about the third neural network to the second device.

17. The method according to any one of claims 13 to 16, wherein the method further comprises:
    receiving, by the first device, capability information from the second device, wherein the capability information indicates one or more of the following information about the second device:

    whether to support using the neural network to replace or implement a function of a communication module;
    whether to support a network type of the first neural network;
    whether to support a network type of the third neural network;
    whether to support receiving information about the reference neural network using signaling, wherein the reference neural network is used to train the first neural network;
    whether to support receiving the information about the third neural network using signaling;
    the stored reference neural network;
    memory space for storing the first neural network and/or the third neural network;
    computing power information that may be used to run the neural network; and
    location information of the second device.

18. The method according to any one of claims 13 to 17, wherein the first neural network is a generative adversarial network or a variational autoencoder.

19. The method according to any one of claims 13 to 18, wherein the first reference signal comprises a demodulation reference signal DMRS or a channel state information reference signal CSI-RS.

20. The method according to any one of claims 13 to 19, wherein a sequence type of the first reference signal comprises a ZC sequence or a gold sequence.

21. A neural network training method, comprising:

    performing, by a second device, channel estimation based on a first reference signal received from a first device, to determine first channel sample information;
    determining, by the second device, a first neural network, wherein the first neural network is obtained through training based on the first channel sample information; and
    sending, by the second device, information about the first neural network to the first device.

22. The method according to claim 21, wherein the information about the first neural network comprises a model variation of the first neural network relative to a reference neural network, and the reference neural network is used to train the first neural network.

23. The method according to claim 21, wherein the information about the first neural network comprises one or more of the following: a weight of a neural network, an activation function of a neuron, a quantity of neurons at each layer of the neural network, an inter-layer cascading relationship of the neural network, and/or a network type of each layer of the neural network.

24. The method according to any one of claims 21 to 23, wherein the method further comprises:
receiving, by the second device, information about a third neural network from the first device.

25. The method according to any one of claims 21 to 24, wherein the method further comprises:
sending, by the second device, capability information to the first device, wherein the capability information indicates one or more of the following information about the second device:

whether to support using the neural network to replace or implement a function of a communication module;
whether to support a network type of the first neural network;
whether to support a network type of the third neural network;
whether to support receiving information about the reference neural network using signaling, wherein the reference neural network is used to train the first neural network;
whether to support receiving the information about the third neural network using signaling;
the stored reference neural network;
memory space for storing the first neural network and/or the third neural network;
computing power information that may be used to run the neural network; and
location information of the second device.

26. The method according to any one of claims 21 to 25, wherein the first neural network is a generative adversarial network or a variational autoencoder.

27. The method according to any one of claims 21 to 26, wherein the first reference signal comprises a demodulation reference signal DMRS or a channel state information reference signal CSI-RS.

28. The method according to any one of claims 21 to 26, wherein a sequence type of the first reference signal comprises a ZC sequence or a gold sequence.

29. A neural network training method, comprising:

receiving, by a third device, first channel sample information from a first device; and
obtaining, by the third device, a first neural network through training based on the first channel sample information, wherein the first neural network is used to perform inference to obtain second channel sample information, and the second channel sample information is used to train a second neural network and/or a third neural network, wherein the second neural network and/or the third neural network are/is used for transmission of target information between the first device and a second device.

30. A communication apparatus, configured to implement the method according to any one of claims 1 to 7.

31. A communication apparatus, comprising a processor and a memory, wherein the memory is coupled to the processor, and the processor is configured to perform the method according to any one of claims 1 to 7.

32. A communication apparatus, configured to implement the method according to any one of claims 8 to 12.

33. A communication apparatus, comprising a processor and a memory, wherein the memory is coupled to the processor, and the processor is configured to perform the method according to any one of claims 8 to 12.

34. A communication apparatus, configured to implement the method according to claim 29.

35. A communication apparatus, comprising a processor and a memory, wherein the memory is coupled to the processor, and the processor is configured to perform the method according to claim 29.

36. A communication apparatus, configured to implement the method according to any one of claims 13 to 20.

37. A communication apparatus, comprising a processor and a memory, wherein the memory is coupled to the processor, and the processor is configured to perform the method according to any one of claims 13 to 20.

38. A communication apparatus, configured to implement the method according to any one of claims 21 to 28.

39. A communication apparatus, comprising a processor and a memory, wherein the memory is coupled to the processor, and the processor is configured to perform the method according to any one of claims 21 to 28.

40. A communication system, comprising:

the communication apparatus according to claim 30 or 31 and the communication apparatus according to claim 32 or 33;
the communication apparatus according to claim 30 or 31, the communication apparatus according to claim 32 or 33, and the communication apparatus according to claim 34 or 35; or
the communication apparatus according to claim 36 or 37 and the communication apparatus according to claim 38 or 39.

41. A computer-readable storage medium, wherein the computer-readable storage medium stores instructions, and when the instructions are run on a computer, the computer is enabled to perform the method according to any one of claims 1 to 29.

42. A computer program product, comprising instructions, wherein when the instructions are run on a computer, the computer is enabled to perform the method according to any one of claims 1 to 29.

FIG. 1

FIG. 2

FIG. 3

FIG. 4

FIG. 5

**FIG. 6**

**FIG. 7**

**FIG. 8**

FIG. 9

First device

Second device

1001: The first device sends a first
reference signal to the second device

1002: The second device performs
channel estimation based on the
first reference signal received from
the first device, to determine first
channel sample information

1003: The second device sends the first channel
sample information to the first device

1004: The first device obtains a
first neural network through
training based on the first channel
sample information

1005: The first device obtains
second channel sample
information through inference by
using the first neural network

1006: The first device trains a
second neural network and/or a
third neural network based on the
second channel sample
information

1007: The first device sends
information about the third neural
network to the second device

FIG. 10

| Third device | First device | | Second device |
|---|---|---|---|

1101: The first device sends a first reference signal to the second device

1102: The second device performs channel estimation based on the first reference signal received from the first device, to determine first channel sample information

1103: The second device sends the first channel sample information to the first device

1104: The first device sends the first channel sample information to the third device

1105: The third device obtains a first neural network through training based on the first channel sample information

1106: The third device obtains second channel sample information through inference by using the first neural network

1107: The third device trains a second neural network and/or a third neural network based on the second channel sample information

1108: The third device sends information about the second neural network and/or information about the third neural network to the first device

1109: The first device sends the information about the third neural network to the second device

FIG. 11

| First device | | Second device |
|---|---|---|

1201: The second device sends capability
information to the first device

1202: The first device sends a first
reference signal to the second device

1203: The second device performs channel
estimation based on the first reference
signal sent by the first device, to determine
first channel sample information

1204: The second device obtains a first
neural network through training based on
the first channel sample information and a
reference neural network

1205: The second device sends information
about the first neural network to the first device

1206: The first device determines the first
neural network based on the information
about the first neural network

1207: The first device obtains second
channel sample information through
inference based on the first neural network

1208: The first device trains a second
neural network and/or a third neural
network based on the second channel
sample information

1209: The first device sends information about
the third neural network to the second device

FIG. 12

(a) Generator network

FIG. 13

FIG. 14

(a) Generator network

FIG. 15a

$\{\tilde{y}, y\}$

$x$

$c$

Four-layer
convolutional
layer network

Four-layer
fully connected
layer network

(b) Discriminator network

FIG. 15b

FIG. 16a

Transmitter
module

Signal passing-through
channel module

Receiver module

Log-
likelihood
ratio

Bit stream → Constellation mapping neural network → OFDM modulation → ⊗ → ⊕ → OFDM demodulation → Constellation demapping neural network →

$\tilde{h}$

Gaussian white noise → First neural network (generator network of a GAN)

Gaussian white noise

FIG. 16b

1710        1720

Communication
apparatus 1700

Transceiver
module

Processing
Module

FIG. 17

## INTERNATIONAL SEARCH REPORT

International application No.

**PCT/CN2020/142103**

**A.    CLASSIFICATION OF SUBJECT MATTER**

H04L 5/00(2006.01)i

According to International Patent Classification (IPC) or to both national classification and IPC

**B.    FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT, WPI, EPODOC, CNKI, ISI, IEEE: 信道, 链路, 估计, 评估, 神经网络, 深度学习, 机器学习, 训练, 样本, 二, 两, 三, channel, signal, neural network, train, sample, second

**C.    DOCUMENTS CONSIDERED TO BE RELEVANT**

| Category* | Citation of document, with indication, where appropriate, of the relevant passages | Relevant to claim No. |
|---|---|---|
| X | CN 111954309 A (NTT DOCOMO, INC.) 17 November 2020 (2020-11-17) description paragraphs [0042]-[0057], [0071]-[0073], [0096]-[0103], figures 1-4 | 8-12, 21-23, 26-28, 32-33, 38-39, 41-42 |
| A | CN 111342867 A (XI'AN JIAOTONG UNIVERSITY) 26 June 2020 (2020-06-26) entire document | 1-42 |
| A | CN 110198282 A (NOKIA SHANGHAI BELL CO., LTD. et al.) 03 September 2019 (2019-09-03) entire document | 1-42 |
| A | CN 111628946 A (HUAWEI TECHNOLOGIES CO., LTD.) 04 September 2020 (2020-09-04) entire document | 1-42 |
| A | US 2020052757 A1 (AT&T INTELLECTUAL PROPERTY I, L.P.) 13 February 2020 (2020-02-13) entire document | 1-42 |

☐ Further documents are listed in the continuation of Box C.          ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **13 September 2021** | **28 September 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/142103**

| Patent document cited in search report | | | Publication date (day/month/year) | Patent family member(s) | | | Publication date (day/month/year) |
|---|---|---|---|---|---|---|---|
| CN | 111954309 | A | 17 November 2020 | JP | 2020191635 | A | 26 November 2020 |
| | | | | US | 2020367264 | A1 | 19 November 2020 |
| CN | 111342867 | A | 26 June 2020 | | None | | |
| CN | 110198282 | A | 03 September 2019 | US | 2021091979 | A1 | 25 March 2021 |
| | | | | CN | 110198282 | B | 23 June 2020 |
| | | | | WO | 2019165969 | A1 | 06 September 2019 |
| CN | 111628946 | A | 04 September 2020 | | None | | |
| US | 2020052757 | A1 | 13 February 2020 | US | 2020228179 | A1 | 16 July 2020 |
| | | | | US | 10637551 | B2 | 28 April 2020 |

Form PCT/ISA/210 (patent family annex) (January 2015)